# EUROPEAN PATENT APPLICATION

(11) **EP 2 814 160 A1**
(43) Date of publication of application: **17.12.2014**
(21) Application number: 13746988.8
(22) Date of filing: 04.02.2013
(51) Int. Cl.: H02M 3/28, H02M 3/335, H02M 7/12, H02M 7/217

(54) **POWER CONVERSION DEVICE AND METHOD FOR DRIVING SAME**

(30) Priority: 10.02.2012 JP 2012027151
(71) Applicant: Nissan Motor Company, Limited, Kanagawa-ku Yokohama-shi Kanagawa 221-0023 (JP)
(72) Inventor: SUZUKI, Tatsuhiro, Atsugi-shi Kanagawa 243-0123 (JP)
(74) Representative: Hoefer & Partner
(86) International application number: PCT/JP2013/052466
(87) International publication number: WO 2013/118678

(57) **Abstract**

An electric power conversion device 1 includes: a primary circuit 1a having a resonance inductor Lr, a switch unit SU, and a primary winding Tra of a transformer; and a secondary circuit 1b supplying an electric power to primary winding Tra of transformer Tr to supply an energy generated on secondary winding Trb, Trc to a load. Switch unit SU includes: first and second diodes D1, D2 connected in parallel to each other; first and second switching elements S1, S2; and a resonance capacitor Cr. Furthermore, secondary circuit 1b includes an output inductor Lo between secondary windings Trb, Trc and load Vo. This structure achieves reductions of a loss, a size, and a cost and makes possible to suppress a destruction possibility of semiconductor elements and a worsening of a power factor.

## Description

### TECHNICAL FIELD

The present invention relates to an electric power conversion device and a method for driving the same.

### BACKGROUND ART

Conventionally, an electric power conversion device such as a converter or so forth is generally used as one of electric power conversion means. The electric power conversion device is constituted by such components as switching elements of MOSFETs, IGBTs, or so forth, diode(s), capacitor(s), inductor(s), transformer(s), and so forth and has a variety of functions.

In addition, in a case where an electrical power of a direct current load is generally obtained from a receptacle of an electric power supply, it is necessary to convert an alternating current into a direct current. At this time, a high power factor is demanded. A control of the electrical power conversion device obtains the high power factor. In addition, from a viewpoint of a safety purpose, an isolation between an input of the power conversion device and an output of the power conversion device is realized by means of a transformer in an inside of the electrical power conversion device.

In such an electrical power conversion device as described above, a high efficiency, a small sizing, and a low noise are demanded. As a technique of highly efficient and low noise electrical power conversion device, a soft switching technique has been developed. The soft switching is a technique to reduce a loss developed at the time of switching and to reduce the noise, with a voltage applied to a switching element or a current caused to flow through the switching element zeroed when the switching element switches on or off.

In order to achieve this soft switching, an electric power conversion device described in a non-patent document 1 has been proposed. In this electric power conversion device, a voltage booster circuit has an isolated type power factor improvement circuit realized by the soft switching. A turning on of the switching elements provides a zero current switch and a turning off of the switching elements provides a zero voltage switch (refer to non-patent document 1).

In recent years, it becomes necessary to mount such an electric power conversion device as described above in an electric automotive vehicle or plug-in hybrid vehicle as, for example, a charging circuit of a high-voltage battery. The voltage of an input circuit of the charging circuit is varied as AC 90 ∼ 240Vrms (126V ∼ 336 Vpeak) with a worldwide input considered and the voltage of an output circuit thereof is varied depending upon a charging situation of the high voltage battery. The voltage of the output circuit is varied in a range of, for example, 200V ∼ 400V even if a reference voltage is DC 300V.
Thus, in such a case as described above, it is necessary for the electric power conversion device to enable a voltage boosting operation and a voltage step-down operation.

However, in a case where this voltage boosting operation and the step-down operation are realized by one stage of the electrical power conversion device using the structure described in the non-patent document 1, a rise of an output current cannot be suppressed when the step-down operation is carried out and an abrupt flow of the current occurs. Thus, a voltage remarkably exceeding a withstanding voltage of the switching elements is applied and there is a possibility of destroying these semiconductor switching elements.

On the other hand, if switching elements and diodes having the high withstanding voltages are used in order to prevent the destructions of the semiconductor elements, on resistances become high and the loss in (each of) the semiconductor elements is increased since the withstanding voltage of (each of) the semiconductor elements is proportional to the on resistance.

Therefore, in a case where the technique described in non-patent document 1 is applied to the charging circuit, it is necessary to take a structure of two-stage electric power conversion devices by adding a step-down electric power conversion device to a voltage boosting electric power conversion device which performs an improvement in the power factor. Consequently, the number of components are increased and there is a limit of reduction of a cost. In addition, since two-stage circuits are structured, two electric power conversion devices are serially connected. Thus, there is the limits of reductions of the loss, the sizing, and the cost.

### Pre-published document

### Non-patent document

Non-patent document 1: The 2010 Annual Meeting Record I.E.E. Japan No. 4-035 titled An insolated Soft-Switching PFC Converter using a Magnetic Energy Recovery Switch.

### DISCLOSURE OF THE INVENTION

It is an object of the present invention to provide an electric conversion device and a method for driving the same which are capable of achieving a reduction of a loss, a size, and a cost and suppressing a possibility of destructions of semiconductor elements and a worsening of a power factor.

An electric power conversion device according to the present invention includes: a primary circuit having a first inductor, a switch unit whose input terminal is connected to the first inductor, and a primary winding of a transformer connected to an output terminal of the switch unit; and a secondary circuit supplying an energy generated on a secondary winding side to a load in response to a power supply to the primary winding of the transformer. The switch unit includes: first and second diodes whose anodes are connected to the input terminal sides and cathodes are connected to the output terminal sides and which are mutually connected in parallel to each other; a first switching element interposed between the cathode of the first diode and the output terminal; a second switching element interposed between the input terminal and the anode of the second diode. The secondary circuit has a second inductor interposed between the secondary winding and the load.

According to the present invention, the secondary circuit includes the second inductor interposed between the secondary winding and the load. Hence, during a step-down voltage operation, the second inductor suppresses the rise of the output current so that an abrupt current does not flow and the voltage such as to exceed the withstanding voltages of the respective switching elements is not applied so that a situation in which these semiconductor elements are destroyed can be prevented.
In addition, since the destructions of these semiconductor elements are prevented, it is not necessary to use the elements having high withstanding voltages. A situation in which the losses in the semiconductor elements are increased can also be prevented. Furthermore, since the second inductor can realize voltage boosting and voltage step-down by a one-stage circuit, two electric power conversion devices are not serially connected. The reductions of the loss, the size, and the cost can, thereby, be achieved.

### BRIEF DESCRIPTION OF THE DRAWINGS:

[Fig. 1] is a circuit wiring diagram of an electric power conversion device in a first preferred embodiment.
[Fig. 2] is a graph representing a correlation between a drive signal of the electric power conversion device in the first embodiment and a current waveform of switching elements of the electric power conversion device in the first embodiment.
[Fig. 3] is a graph representing a correlation between the drive signal of the electric power conversion device in the first embodiment and a current waveform of a resonance inductor of the electric power conversion device in the first embodiment.
[Fig. 4] is a graph representing a correlation between the drive signal of the electric power conversion device in the first embodiment and a current waveform of the switching elements of the electric power conversion device in the first embodiment.
[Fig. 5] is a graph representing a correlation between the drive signal of the electric power conversion device in the first embodiment and the current waveform of an output inductor of the electric power conversion device in the first embodiment.
[Fig. 6] is a graph representing a correlation between the drive signal of the electric power conversion device in the first embodiment and a voltage waveform of the switching elements of the electric power conversion device in the first embodiment.
[Fig. 7] is a graph representing a correlation between the drive signal of the electric power conversion device and a voltage waveform of a resonance capacitor of the electric power conversion device.
[Fig. 8] is a graph representing the drive signal and a current waveform of the output inductor when an output power of 1kW is obtained in a case where a voltage is boosted from a direct current power supply of 336VDC to a direct current constant voltage load of 400V.
[Fig. 9] is a graph representing the drive signal and the current waveform of the resonance inductor when an output power of 1kW is obtained in a case where a voltage is boosted from a direct current power supply of 336VDC to a direct current constant voltage load of 400V.
[Fig. 10] is a graph representing the drive signal and the voltage waveform of the switching elements when an output power of 1kW is obtained in a case where a voltage is boosted from a direct current power supply of 336VDC to a direct current constant voltage load of 400V.
[Fig. 11] is a graph representing the drive signal and the voltage waveform of the output inductor when an output power of 2kW is obtained in a case where a voltage is boosted from a direct current power supply of 336VDC to a direct current constant voltage load of 400V.
[Fig. 12] is a graph representing the drive signal and the current waveform of the resonance inductor when an output power of 2kW is obtained in a case where a voltage is boosted from a direct current power supply of 336VDC to a direct current constant voltage load of 400V.
[Fig. 13] is a graph representing the drive signal and the voltage waveform of the switching elements when an output power of 2kW is obtained in a case where a voltage is boosted from a direct current power supply of 336VDC to a direct current constant voltage load of 400V.
[Fig. 14] is a graph representing a correlation between a percentage of an inductance value of a primary winding of a transformer Tr with respect to an inductance value of a resonance inductor Lr, an output power, and a voltage across a resonance capacitor Cr.
[Fig. 15] is a graph representing the drive signal in a voltage step-down operation in the electric power conversion device 1 in the first embodiment and a voltage waveform of resonance capacitor Cr.
[Fig. 16] is a graph representing a correlation between the drive signal in a voltage step-down operation in electric power conversion device 1 related to the first embodiment and a current waveform of resonance inductor Lr.
[Fig. 17] is a graph representing a correlation between the drive signal in the step-down operation in electric power conversion device 1 in the first embodiment and current waveform of switching elements S1, S2.
[Fig. 18] is a graph representing a correlation between the drive signal in the step-down operation in electric power conversion device 1 in the first embodiment and voltage waveform of switching elements S1, S2.
[Fig. 19] is a circuit wiring diagram representing an electric conversion device 100 in a comparative example.
[Fig. 20] is a graph representing a correlation between the drive signal in a voltage step-down operation of electric power conversion device 100 in the comparative example and a current waveform of a point A.
[Fig. 21] is a graph representing a correlation between the drive signal and current waveform of resonance inductor Lr in the step-down operation in electric power conversion device 100 of the comparative example.
[Fig. 22] is a graph representing a correlation between the drive signal and voltage waveform of resonance capacitor Cr in the step-down operation of electric conversion device 100 in the comparative example.
[Fig. 23] is a circuit wiring diagram of an electric conversion device in a second preferred embodiment.
[Fig. 24] is a graph representing a correlation between the drive signal and current waveform of switching elements S21, S22, S23, S24 in electric conversion device 2 in the second embodiment.
[Fig. 25] is a graph representing a correlation between the drive signal and a current waveform of output inductor Lo in electric conversion device 2 of the second embodiment.
[Fig. 26] is a graph representing a correlation between the drive signal and current waveform of switching elements S21, S22, S23, S24 in electric conversion device 2 in the second embodiment.
[Fig. 27] is a graph representing a correlation between the drive signal and current waveform of resonance inductor Lr in electric conversion device 2 in the second embodiment.
[Figs. 28(a) and 28(b)] are graphs representing the correlation between the drive signal and the voltage waveform of switching elements S21 through S24 in electric conversion device 2 in the second embodiment, Fig. 28(a) representing voltages across first and second switching elements S21, S22 and Fig. 28(b) representing voltages across third and fourth switching elements S23, S24.
[Fig. 29] is a graph representing a correlation between the drive signal for switching elements S21, S22 and voltage waveform of resonance capacitor Cr1 in electric power conversion device 2 in the second embodiment.
[Fig. 30] is a graph representing the drive signal and the current waveform of output inductor Lo when the output power of 1kW is obtained in a case where a voltage boosting from a direct current power supply of 336VDC to a direct current constant voltage load Vo of 400V is carried out.
[Fig. 31] is a graph representing the drive signal and current waveform of switching elements S21 through S24 when an output power of 1kW is obtained in a case where a voltage boosting from a direct current power supply of 336VDC to a direct current constant voltage load Vo of 400V is carried out.
[Fig. 32(a) and Fig. 32(b)] are graphs representing the drive signal and voltage waveforms of switching elements S21 through S24 when the output power of 1kW is obtained in a case where a voltage boosting from a direct current power supply of 336VDC to a direct current constant voltage load Vo of 400V is carried out.
[Fig. 33] is a graph representing the drive signal and the current waveform of output inductor Lo when the output power of 2kW is obtained in a case where a voltage boosting from a direct current power supply of 336VDC to a direct current constant voltage load Vo of 400V is carried out.
[Fig. 34] is a graph representing the drive signal and the current waveform of switching elements S21 through S24 when the output power of 2kW is obtained in a case where a voltage boosting from a direct current power supply of 336VDC to a direct current constant voltage load Vo of 400V is carried out.
[Figs. 35(a) and 35(b)] are graphs representing the drive signal and voltage waveforms of switching elements S21 through S24 when the output power of 2kW is obtained in a case where a voltage boosting from a direct current power supply of 336VDC to a direct current constant voltage load Vo of 400V is carried out, Fig. 35(a) representing voltages across switching elements S21, S22 and Fig. 35(b) representing voltages across switching elements S23, S24.
[Figs. 36(a) and 36(b)] are graphs representing a correlation between the drive signal and voltage waveforms of resonance capacitors Cr1, Cr2 in the voltage step-down operation in electric conversion device 2 in the second embodiment, Fig. 36(a) representing the voltage across resonance capacitor Cr1 and Fig. 36(b) representing a voltage across resonance capacitor Cr2.
[Fig. 37] is a graph representing a correlation between the drive signal and current waveform of resonance inductor Lr in the step-down operation of electric power conversion device in the second embodiment.
[Fig. 38] is a graph representing a correlation between the drive signal and current waveforms of switching elements S21 through S24 in the voltage step-down operation of electric power conversion device 2 in the second embodiment.
[Figs. 39(a) and 39(b)] are graphs representing a correlation between the drive signal and voltage waveforms in switching elements S21 through S24 in the step-down operation of electric conversion device 2 in the second embodiment, Fig. 39(a) representing the voltages across switching elements S21, S22 and Fig. 39(b) representing voltages across switching elements S23, S24.
[Fig. 40] is a circuit wiring diagram of electric power conversion device 3 in a third preferred embodiment.
[Fig. 41] is a circuit wiring diagram of electric power conversion device 4 in a fourth preferred embodiment.

### EMBODIMENTS FOR CARRYING OUT THE INVENTION

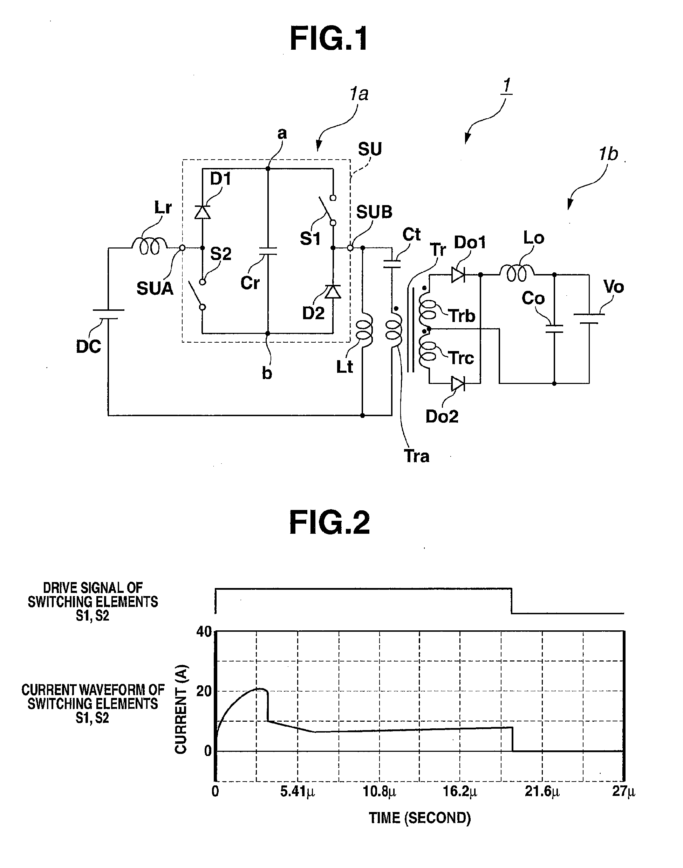

Hereinafter, preferred embodiments according to the present invention will be described on a basis of drawings. Fig. 1 shows a circuit configuration view representing an electric power conversion device 1 in a first preferred embodiment. Electric power conversion device 1 shown in Fig. 1 includes a primary circuit 1a and a secondary circuit 1b. Primary circuit 1a includes: a direct current power supply DC; a resonance inductor (a first inductor) Lr having one terminal connected to a positive terminal of direct current power supply DC; a switch unit SU having an input terminal SUA and an output terminal SUB, input terminal SUA being connected to the other terminal of resonance inductor Lr; and a primary winding Tra of a transformer Tr having one terminal connected to output terminal SUB of switch unit SU and the other terminal connected to a negative terminal of direct current power supply DC.
It should be noted that direct current power supply DC indicated in the preferred embodiment as will be described below is not only the direct current power supply in itself but may include a circuit in which an alternating current power supply to which a rectifying circuit is added which functions in the same way as the direct current supply.

In addition, electric power conversion device 1 includes a direct current blocking capacitor Ct interposed between an output terminal SUB of switch unit SU and primary winding Tra of transformer Tr. Furthermore, electric power conversion device 1 includes an energy storing inductor Lt connected in parallel to direct current blocking capacitor Ct and primary winding Tra of transformer Tr.

In addition, secondary circuit 1b of electric power conversion device 1 includes: two secondary windings Trb, Trc of transformer Tr; output rectifying diodes Do1, Do2; and an output capacitor Co.
Two secondary windings Trb, Trc of transformer Tr are serially connected to each other, one terminal of first secondary winding Trb being connected to an anode of a first output rectifying diode Do1. In addition, the other terminal of a second secondary winding Trc is connected to the anode of a second output rectifying diode Do2. Cathodes of first and second output rectifying diodes Do1, Do2 and a center tap of two secondary windings Trb, Trc are connected to a load Vo to form a closed circuit. Then, an output capacitor Co is connected in parallel to load Vo.

In addition, as shown in Fig. 1, switch unit SU includes: first and second diodes D1, D2; first and second switching elements S1, S2; and resonance capacitor Cr.

Anodes of first and second diodes D1, D2 are connected to an input terminal SUA side, cathodes of first and second diodes D1, D2 are connected to an output terminal SUB side, and mutally connected in parallel to each other.
First switching element S1 is intervened between a cathode of first diode D1 and output terminal SUB to conduct first diode D1 and output terminal SUB in response to an input of an on signal. Second switching element S2 is intervened between input terminal SUA and anode of second diode D2 to conduct input terminal SUA and second diode D2 in response to an input of an on signal.

In addition, resonance capacitor Cr is interposed between a junction point a between the cathode of first diode D1 and first switching element S1 and a junction point b between switching element S2 and second diode D2.

Furthermore, secondary circuit 1b of electric power conversion device 1 includes an output inductor (a second inductor) Lo. Output inductor Lo is connected between first and second output rectifying diodes Do1, Do2 and an output capacitor Co. Specifically, one terminal side of output inductor Lo is connected to cathodes of firest and second output rectifying diodes Do1, Do2 and the other terminal thereof is connected to one terminal of load Vo and output capacitor Co.

Next, a driving method of electric power conversion device 1 in the first embodiment will be explained. This electric power conversion device 1 performs an on-or-off control of switching elements S1, S2 by means of a control section (not shown) so that a voltage boosting operation and a voltage step-down operation can be achieved. First, a basic driving method in the voltage boosting operation and the voltage step-down operation will be described.

At an initial stage, switching elements S1, S2 are in an off state and resonance capacitor Cr is in a charged state. Then, the control section outputs on signals to switching elements S1, S2 to turn on switching elements S1, S2. At this time, a phase of a current flowing through resonance inductor Lr is delayed so that a zero current switch at switching elements S1, S2 is achieved.

In addition, at this time, a voltage which is an addition of voltages across direct current power supply DC and resonance capacitor Cr is applied across resonance inductor Lr, energy storing inductor Lt, and a serial circuit of direct current blocking capacitor Ct and primary winding Tra of transformer Tr.

A voltage applied to primary winding Tra of transformer Tr is transmitted to a secondary winding side, rectified by means of output rectifying diodes Do1, Do2, and applied to output inductor Lo and output capacitor Co.

It should be noted that, during the operation described above, resonance inductor Lr, energy storing inductor Lt, and output inductor Lo are charged. Furthermore, during a discharge of resonance capacitor Cr, since a voltage is left in resonance capacitor Cr, the first and second diodes D1, D2 are reversely biased so that no current is caused to flow through diodes D1, D2.

Thereafter, when the discharge of resonance capacitor Cr is ended, the reverse biased states of first and second diodes D1, D2 are eliminated so that a current is caused to start to flow through first and second diodes D1, D2.
Direct current power supply DC gives the voltage to resonance inductor Lr, energy storing inductor Lt, and primary winding Tra of transformer Tr and to continue the charging for the inductors and primary winding.

Next, the control section turns off switching elements S1, S2. Thus, the energy stored in resonance capacitor Lr is moved into resonance capacitor Cr via first and second diodes D1, D2 so that the voltage across resonance capacitor Cr is raised.
It should be noted that a maximum voltage applied across first and second switching elements S1, S2 is the same as voltage across resonance capacitor Cr if a forward drop voltage of (each of) first and second diodes D1, D2 during the conduction state is approximately zero. In addition, since a voltage rise in resonance capacitor Cr is delayed with respect to the turning off of switching elements S1, S2. Therefore, in first and second switching elements S1, S2, a zero voltage switch can be achieved.

It should be noted that, during an off interval of first and second switching elements S1, S2, energy storing inductor Lt gives a reversed voltage and current to primary winding Tra of transformer Tr so that transformer Tr is not saturated. In addition, in the secondary side, the energy is supplied to load Vo by means of energy storing inductor Lt and output inductor Lo so that the current is continued to flow. The energy stored in resonance capacitor Cr is held until the next turning on of first and second switching elements S1, S2.

In a case where, in the above-described operation, switching elements S1, S2 are turned on, a higher voltage than direct current power supply DC is applied to the primary side due to the discharge in resonance capacitor Cr. Therefore, even if a winding ratio of transformer Tr is 1: 1, a voltage higher than direct current power supply DC can be applied to load Vo which is connected in parallel to output capacitor Co. Thus, the voltage boosting operation can be realized. In addition, in the voltage drop (step-down) operation, a time during which the switching elements are turned on can be shortened so that the voltage drop (step-down) operation can be achieved.

The basic driving method has, hitherto, been described. Next, a voltage boosting operation of electric power conversion device 1 will be described below. In a case where electric power conversion device 1 performs the voltage boosting operation, an on time duration per unit time of first and second switching elements S1, S2 is made longer.
Specifically, electric power conversion device 1 carries out either one of a pulse width modulation control or a pulse density modulation control in order to elongate the on time duration per unit time of first and second switching elements S1, S2. The pulse width modulation control is a method of controlling a pulsewidth of the drive signal for (each of) first switching element and second switching element S1, S2 (viz., a width of a pulse during which each of first and second switching elements S1, S2 is turned on). In addition, the pulse density modulation control is a control method for modulating a density of pulses per unit time of the drive signal (the pulse during which each of first and second switching elements S1, S2 is turned on).

An example of a voltage boosting operation of electric power conversion device 1 by means of the pulse width modulation control will be described below. It should be noted that, in this example, circuit constants of respective elements are described in the following table 1.

**[Table 1]**

| | |
|---|---|
| resonance inductor Lr | 30 *µ*H |
| resonance capacitor Cr | 56 nF |
| energy storing inductor Lt | 400 *µ*H |
| direct current blocking capacitor Ct | 4.7 *µ*F |
| transformer Tr | 2mH |
| output inductor Lo | 91 *µ*H |
| output capacitor Co | 100 *µ*H |

Furthermore, this example indicates a case where the voltage is boosted from direct current power supply DC of 80VDC and an electric power of 1kW is supplied to a load Vo of 400VDC which simulates a battery load. An operating condition of switching elements S1, S2 at this time is an operating frequency of 37kHz and a duty ratio of 0.73.

First, as described above, in this embodiment, the zero current switch and the zero voltage switch are achieved. Fig. 2 is a graph representing a correlation between the drive signal and the current waveform of switching elements S1, S2 in electric power conversion device 1 in this embodiment. As described above, since resonance inductor Lr is installed in primary circuit 1a, a phase delay of the current occurs. Therefore, as shown in Fig. 2, the current is caused to gradually rise in response to the on state of the drive signal and the current is zero at the time of the on state of the drive signal. Thus, the zero current switch is achieved and a switching loss is reduced.

It should be noted that, in order to achieve the zero current switch, it is necessary for at least one current of resonance inductor Lr and output inductor Lo to be zero at a time of the turn on of switching elements S1 and S2. That is to say, it is necessary to be those as shown in Table 2

**[Table 2]**

| | Condition 1 | Condition 2 | Condition 3 | Condition 4 |
|---|---|---|---|---|
| resonance inductor Lr | current =0 | current >0 | current =0 | current >0 |
| output inductor Lo | current =0 | current =0 | current >0 | current >0 |
| zero current switch | O | - | O | X |

It should be noted that, since the circuit structure shown in Fig. 1 cannot realize condition 2, " -" is indicated in Table 2.

Hereinafter, the detailed description of the zero current switch will be made. It should be noted that the zero current switch will be explained by referring to the example in which a simulation is under a condition such as input voltage of 80VDC, an output voltage of 200V, an output power of 1kW, a duty ratio of 0.64, and an operating frequency of 75kHz using electric power conversion device 1 having the circuit constants shown in Table 1. Electric power conversion device 1 in this embodiment has a maximum output current in this operating condition. This simulation corresponds to condition 3 shown in Table 2.

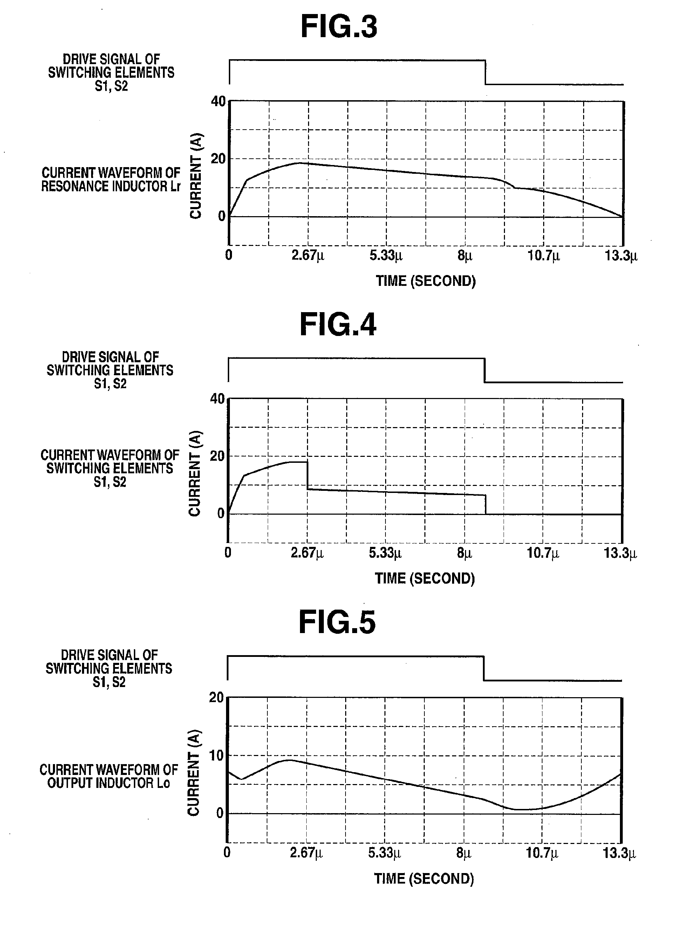

Fig. 3 is a graph representing a correlation between the drive signal and a current waveform of resonance inductor Lr in electric conversion device 1 in this preferred embodiment. Fig. 4 is a graph representing a correlation between the drive signal and a current waveform of switching elements S1, S2 in electric power conversion device 1.
As shown in Fig. 3, the current of resonance inductor Lr is zero during the on state of the drive signal. Therefore, as shown in Fig. 4, the current flowing through (each of) switching elements S1, S2 indicates zero. Even under the operating condition under which the output current becomes maximum, the zero current switch can be realized.

It should be noted that, the current flowing through output inductor Lo in this case is as shown in Fig. 5. Fig. 5 shows a graph representing the correlation between the drive signal and a current waveform of output inductor Lo in electric power conversion device 1 in this embodiment. As shown in Fig. 5, current is always caused to flow through output inductor Lo and current is a value exceeding 0 at the time of on state of the drive signal. However, as shown in Fig. 3, since the current of resonance inductor Lr is zeroed at a time of the on state of the drive signal, the zero current switch can be achieved.

It should herein be noted that, as shown in Fig. 3, whether the current of resonance inductor Lr during the turn on of the switching elements S1, S2 indicates zero is dependent on a capacitance of resonance capacitor Cr and the operating frequency of (each of) the switching elements S1, S2.

As the capacitance of resonance capacitor Cr becomes increased, the output power is increased. However, a time at which the current of resonance inductor Lr becomes zero becomes short and, at last, the current does not become zero.
Similarly, as the operating frequency is increased, the output power is increased. However, the time at which the current of resonance inductor Lr becomes zero becomes shortened and at last the current does not become zero.

Therefore, the capacitance of resonance capacitor Cr and the operating frequency of switching elements S1, S2 are set so that, in a case where the output power is the maximum and the input current is maximum, the current flowing through resonance inductor Lr is at least zero during the turn on of switching elements S1, S2.
Specially, the capacitance of resonance capacitor Cr and the operating frequency are set for the current of resonance inductor Lr to be critically discontinuous. Specifically, the capacitance of resonance capacitor Cr was 56nF and the operating frequency of switching elements S1, S2 was 75kHz as shown in Table 1 in this embodiment. For the other operating region, the operating frequency is controlled to be equal to or less than 75kHz and the current of resonance inductor Lr is accurately discontinuous.

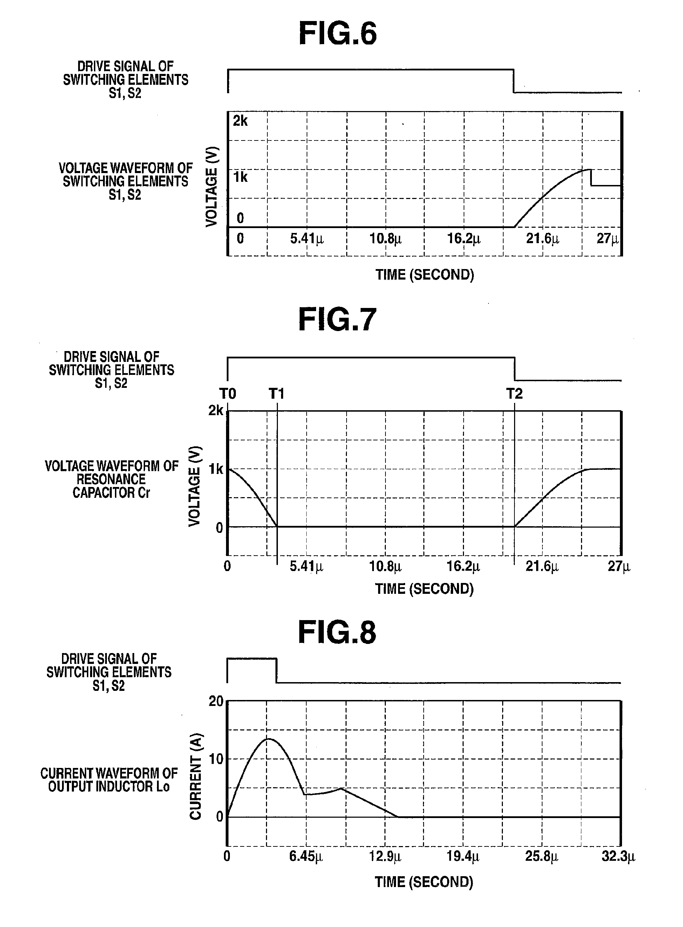

Next, the zero voltage switch will be described in details. Fig. 6 shows a graph representing the correlation between the drive signal and a voltage waveform of (each of) switching elements S1, S2 in electric power conversion device 1 in this embodiment. As described above, electric power conversion device 1 in this embodiment has the primary circuit 1a including resonance capacitor Cr. As shown in Fig. 6, the voltage is gradually raised in response to the off state of the drive signal. Since the voltage is zero at the time of off state of the drive signal, the zero voltage switch is achieved and, thus, a switching loss is reduced.

It should be noted that, in order to achieve the zero voltage switch, it is necessary to complete a discharge of resonance capacitor Cr at the time of off state of the drive signal. Fig. 7 shows a graph representing the correlation between the drive signal and the voltage waveform of resonance capacitor Cr in electric power conversion device 1 in the first embodiment.

As described above, when the drive signal is turned on, resonance capacitor Cr starts the discharge. Therefore, as shown in Fig. 7, when the drive signal is turned on at a time T0, the voltage across resonance capacitor Cr is reduced. Then, at a time of T1, the discharge of resonance capacitor Cr is completed. Therefore, switching elements S1, S2 must be on for the time duration equal to or longer than a time duration from which the discharge of resonance capacitor Cr has been started to a time at which the discharge is ended.

It should be noted that switching elements S1, S2 may be in the on state equal to or longer than the above-described time. However, with an off interval of (each of) switching elements S1, S2 taken into consideration, an on time of the switching is adjusted in a range of up to half of an operating period of the on-or-off control of switching elements S1, S2. Thus, the output power of electric power conversion device 1 is controlled.

Next, the voltage boosting operation by means of the pulse density modulation control will be described below.
A pulsewidth of the drive signal is needed to be equal to or longer than the time duration from time T0 to time T1 as explained with reference to Fig. 7.
Hence, the pulsewidth having an on time from time T0 to T1 is a minimum pulsewidth to obtain the zero voltage switch. In the pulsewidth density modulation control, the minimum pulsewidth is one pulse and the number of pulses per unit time (viz., density) is adjusted. This adjustment of the number of pulses can control the output power.

Especially, the pulse density modulation control is effective in a case where the voltage of direct current power supply DC is high. This is because, in a case where the same output power is obtained, it is necessary for the pulsewidth to be narrower even if the same output power is obtained.

In a case where the voltage is boosted from direct current power supply DC of 336VDC to a direct current constant voltage load Vo of 400V in electric power conversion device 1 in the first embodiment, the drive signal, current waveform, and voltage waveform when the output power of 1kW is obtained will be described below.

Fig. 8 shows the drive signal and the current waveform of output inductor Lo when the output power of 1kW is obtained in a case where the voltage is boosted from direct current power supply DC of 336VDC to direct current constant voltage load Vo of 400V. As shown in Fig. 8, the current of output inductor Lo is gradually raised during the interval at which the drive signal is in the on state (turned on) and is gradually reduced when the drive signal is in the off state (turned off).

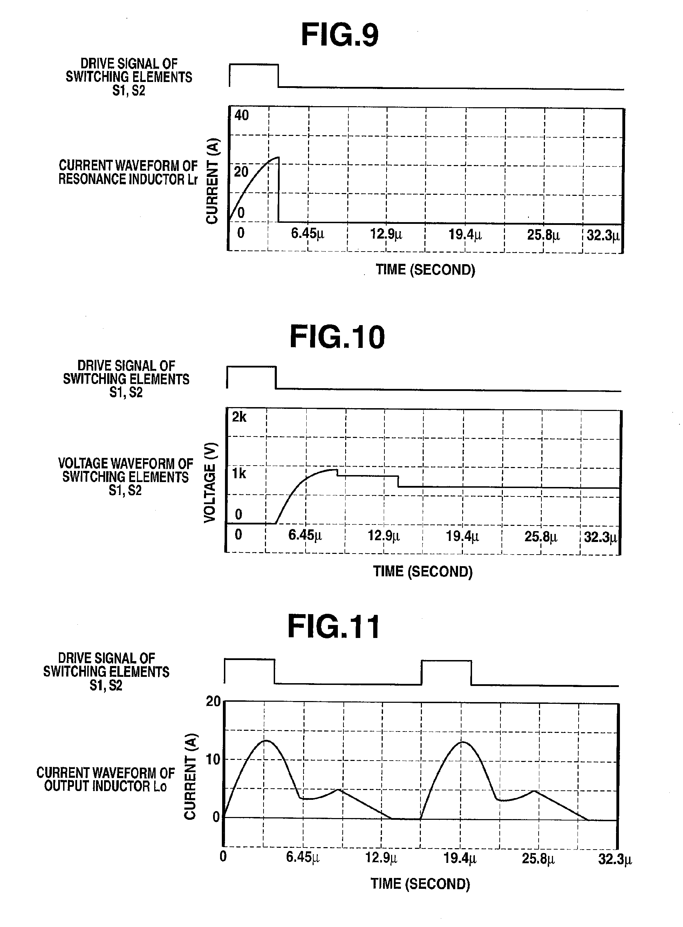

Fig. 9 shows the graph representing the drive signal and the current waveform of resonance inductor Lr when the output power of 1kW is obtained in a case where the voltage is boosted from direct current power supply DC of 336VDC to direct current constant voltage load Vo of 400V. As shown in Fig. 9, the current of resonance inductor Lr is gradually raised during the on interval of the drive signal and is reduced to zero when the drive signal is in the off state (turned off).

Fig. 10 shows the graph representing the drive signal and the voltage waveform of (each of) switching elements S1, S2 when the output power of 1kW is obtained in a case where the voltage is boosted from direct current power supply of 336VDC to direct current constant voltage load Vo of 400V.
As shown in Fig. 10, the voltage across (each of) switching elements S1, S2 is gradually raised when the drive signal is in the off state (turned off) and, thereafter, is stable at a charge voltage of resonance capacitor Cr.

Next, in a case where the voltage is boosted from direct current power supply DC of 336VDC to direct current constant voltage load Vo of 400V, the drive signal and current and voltage waveforms when the output power of 2kW is obtained will be explained below.

Fig. 11 shows a graph representing the drive signal and the current waveform of output inductor Lo when the output power of 2kW is obtained in a case where the voltage is boosted from direct current power supply DC of 336VDC to direct current constant voltage load Vo of 400V. Since, in Fig. 11, the drive signal is twice turned on during the same interval as Fig. 8, the current of output inductor Lo repeats the rise and drop twice during this interval.

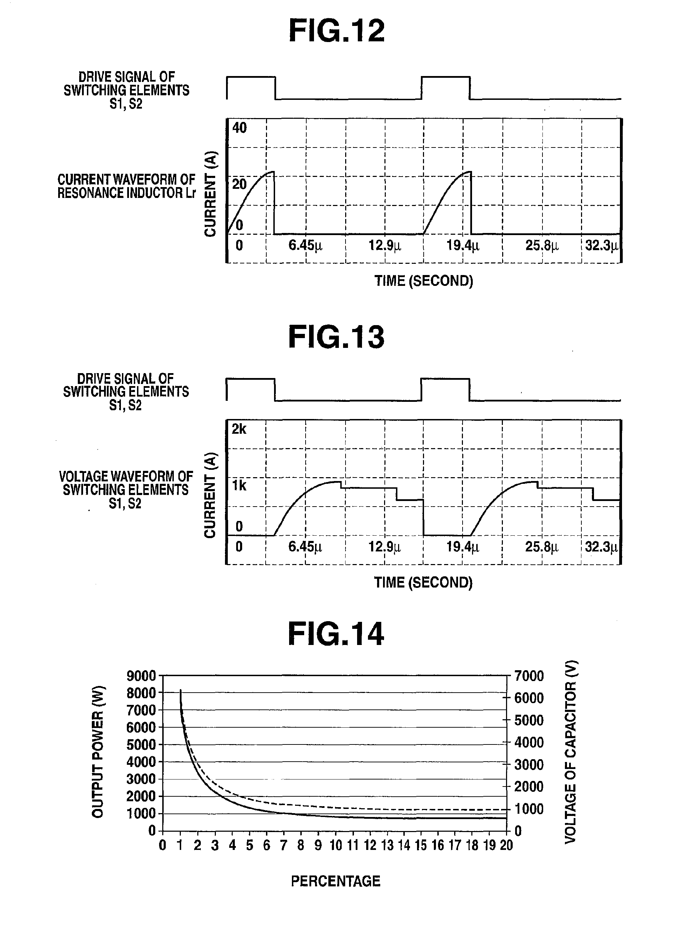

Fig. 12 shows a graph representing the drive signal and the current waveform of resonance inductor Lr when the output power of 2kW is obtained in a case where the voltage is boosted from direct current power supply DC of 336VDC to direct current constant voltage load Vo of 400V. Since, in Fig. 12, the drive signal is turned on twice at the same interval of Fig. 9, two current waveforms of resonance inductor Lr are obtained which are gradually raised during the on interval of the drive signal and are reduced to zero during the off interval of the drive signal.

Fig. 13 shows a graph representing the drive signal and the voltage waveform of (each of) switching elements S1, S2 when the output power of 2kW is obtained in a case where the voltage is boosted from direct current power supply DC of 336VDC to direct current constant voltage load Vo of 400V.
Since, in Fig. 13, the drive signal is turned on twice at the same interval as Fig. 10, two voltage waveforms of switching elements S1, S2 such that the voltage is gradually increased during the off state of the drive signal and, thereafter, becomes stable at the charged voltage of resonance capacitor Cr are obtained.

It should be noted that, in a case where the output power is 1kW, the operating frequency is 31kHz and, in a case where the output power is 2kW, the operating frequency is 62kHz.

As described above, in the pulse density modulation control, the number of pulses per unit time are adjusted so that the voltage boosting operation can be performed. In addition, as shown in Fig. 11, since the number of current pulses flowing through output inductor Lo are also twice, the output power can be twice. That is to say, the output power can be controlled by increasing or decreasing the number of pulses per unit time.

In addition, the zero current switch is achieved as shown in Figs. 9 and 12 since the current phase delay occurs due to resonance inductor Lr in the pulse density modulation control. Furthermore, the on time of a single pulse in the pulse density modulation control has a minimum pulsewidth shown in Fig. 7. Thus, the zero voltage switch as shown in Figs. 10 and 13 is achieved.

As described above, the voltage boosting operation has been explained. It should be noted that, in the voltage boosting operation, a relationship between an inductance value of primary winding Tra of transformer Tr and the inductance value of resonance inductor Lr becomes important. Fig. 14 shows a graph representing a percentage of the inductance value of primary winding Tra of transformer Tr with respect to the inductance value of resonance inductor Lr and representing a correlation between the output power and voltage across resonance capacitor Cr.

It should be noted that Fig. 14 shows a result of simulation between the output power and voltage across resonance capacitor Cr when an excitation inductance value of transformer Tr with respect to the inductance value of resonance inductor Lr is varied in a case where the voltage is boosted from direct current power supply DC of 80VDC to direct current constant voltage load R of 400VDC. The duty ratio of switching elements S1, S2 at this time is constant at 0.5, a solid line in Fig. 14 denotes the output power, and a broken line in Fig. 14 denotes a voltage across resonance capacitor Cr.

As shown in Fig. 14, as the percentage is made smaller, namely, as the inductance value of primary winding Tra of transformer Tr is made smaller, a larger output power can be obtained even though the same duty ratio.
In addition, if the percentage is approximately ten times or lower, as compared with the condition of twenty times, the output power is increased by 10% or more and the effect becomes larger. This is because, if the inductance value of primary winding Tra is made smaller, the current flowing through primary winding Tra becomes increased. This current flowing through the primary winding Tra is increased and this current energy is moved toward the secondary side. Consequently, the output power is increased.

However, as shown in Fig. 14, the voltage across resonance capacitor Cr is raised together with the rise in the output power. The voltage across resonance capacitor Cr is applied to switching elements S1, S2 and diodes D1, D2. Hence, the voltage across resonance capacitor Cr is desired to be low.
Especially, if the percentage is smaller than two times, as compared with a case of twenty times, the voltage across resonance capacitor Cr is boosted to be three times or more. Therefore, the percentage is desirably two times or more.

As described above, the inductance value of primary winding Tra of transformer Tr is desirably equal to or more than two times but equal to or smaller than ten times the inductance value of resonance capacitor Lr.
This is because, if the inductance value of primary winding Tra of transformer Tr is ten times or smaller than the inductance value of resonance capacitor Lr, such a situation that a sufficient output power cannot be obtained can be prevented. In addition, if the inductance value of primary winding Tra of transformer Tr is two times or smaller than the inductance value of resonance inductor Lr, it is not necessary to use high withstanding voltage switching elements since large voltage is not applied to resonance capacitor Cr.

It should be noted that it is more desirable to set the percentage to be five times or more. Thus, the voltage applied to resonance capacitor Cr can be made to be lower. Consequently, semiconductor elements having the same withstanding voltages as the conventional art can be used.

Next, the voltage step-down operation of electric power conversion device 1 in the first embodiment will be described. As described above, electric power conversion device 1 in the first embodiment achieves the zero current switch and the zero voltage switch in the voltage step-down operation.
A base of the driving method in the voltage step-down operation is the same as the voltage boost operation.
In the voltage step-down operation, if the interval during which switching elements S1, S2 are in the on state is shortened, the time to charge energy storing inductor Lt and output inductor Lo is also shortened and the electric power moved to load Vo becomes small. It should be noted that, during the interval during which switching elements S1, S2 are in the off state, the energy stored in energy storing inductor Lt and output inductor Lo is circulated to load Vo by means of output rectifying diodes Do1, Do2.

Next, current and voltage waveforms of the respective elements in a case where electric power conversion device 1 performs the voltage step-down operation will be described below.
It should be noted that a circuit constant of each element as shown in Table 1 is adopted in this example. In addition, this example shows the case where the voltage is stepped down (dropped) from direct current power supply DC of 336VDC and an electric power of 1kW is supplied to load Vo of 200VDC. The operating condition of switching elements S1, S2 is operating frequency of 39kHz.

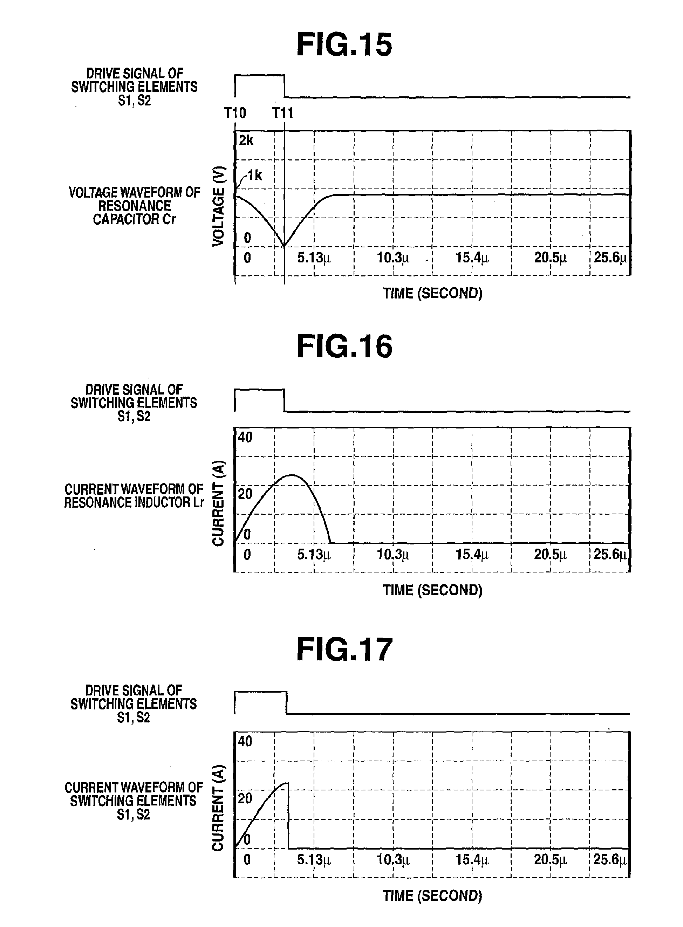

Fig. 15 shows a graph representing a correlation between the drive signal and the voltage waveform of resonance capacitor Cr in the voltage step-down (drop) operation of electric power conversion device 1 in this embodiment.
Fig. 16 shows a graph representing a correlation between the drive signal and the current waveform of resonance inductor Lr in the voltage step-down operation of electric power conversion device 1 in this embodiment.
As shown in Fig. 15, in the voltage step-down operation, when switching elements S1, S2 are turned on, the voltage across resonance capacitor Cr is gradually dropped (reduced) and when switching elements S1, S2 are turned off, the voltage across resonance capacitor Cr is gradually raised (increased). At this time, the voltage across resonance capacitor Cr was suppressed to 849V. If such a voltage as described above is obtained, switching elements S1, S2 and diodes D1, D2 whose withstanding voltages are 1200V or 1500V class are applicable and can be operated without destruction. In addition, as shown in Fig. 16, the current flowing through resonance inductor Lr was about 23A at maximum.

Fig. 17 shows a graph representing a correlation between the drive signal and the current waveform of switching elements S1, S2 in the voltage step-down operation of electric power conversion device 1 in this embodiment.
As shown in Fig. 17, the current flowing through (each of) switching elements S1, S2 gradually rises in response to the on state of the drive signal. Since the current is zero at the time of the on state of the drive signal, the zero current switch is achieved, and the switching loss is reduced.

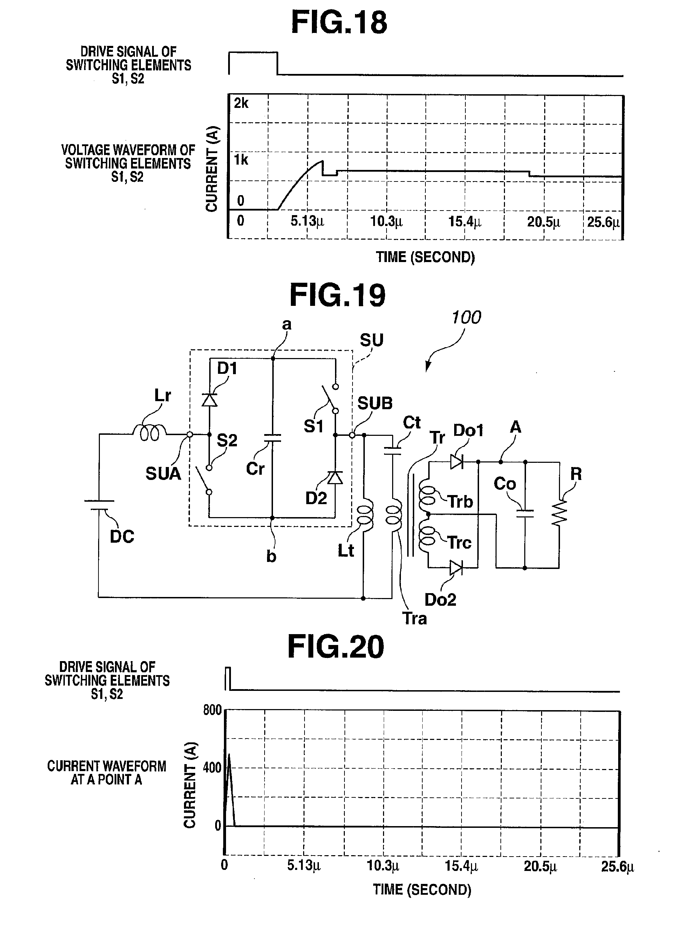

Fig. 18 shows a graph representing the correlation between the drive signal and the voltage waveform of switching elements S1, S2 in the voltage step-down operation of electric power conversion device 1 in this embodiment. As shown in Fig. 18, the voltage across (each of) switching elements S1, S2 is gradually increased in response to the off state of the drive signal. This voltage is zero at the time of the off state of the drive signal. Thus, the zero voltage switch is achieved and the switching loss is accordingly reduced.

It should be noted that, as described above, the voltage across resonance capacitor Cr is as small as possible since the voltage across resonance capacitor Cr is affected by the voltage across (each of) switching elements S1, S2. In order to achieve this, it is necessary to make the current energy within resonance inductor Lr small before the turning off of switching elements S1, S2. The current increase within resonance inductor Lr can be suppressed by the increase in the inductance value of resonance inductor Lr and by the increase in the inductance value of output inductor Lo.

Conventionally, output inductor Lo is not installed. Hence, there is only the way of increase in the inductance value of resonance inductor Lr. However, if the inductance value of resonance inductor Lr is increased, the current energy is also increased in proportion to the inductance value, a charge energy to move to resonance capacitor Cr is raised, and the voltage across resonance capacitor Cr is raised.

However, in electric power conversion device 1 in this embodiment, output inductor Lo is installed at the secondary side. Therefore, the inductance value of output inductor Lo is increased so that the current increase can be suppressed. It should, herein, be noted that the current increase can be suppressed by increasing the inductance value of output inductor Lo. However, in a case where the inductance value of output inductor Lo is increased, the current energy within output inductor Lo is also increased. However, this energy does not contribute on the charging of resonance capacitor Cr but is circulated to the load side by means of output rectifying diodes Do1, Do2. Therefore, while the voltage rise of resonance capacitor Cr is prevented, the voltage step-down operation becomes possible.

Furthermore, since output inductor Lo functions as a filter to make a variation in the output current at the time of the voltage step-down operation and at the time of the voltage boosting operation smaller, the generation of noise can be suppressed.

The voltage boosting operation and the voltage step-down operation in this embodiment have been explained as described above. Next, electric power conversion device 100 in which output inductor Lo is not installed will be described.
Fig.19 shows a circuit wiring diagram representing an electric power conversion device 100 in a comparative example. In Fig. 19, the same reference numerals as those described in Fig. 11 designate like elements and the detailed explanation of these elements will, herein, be omitted.
It should be noted that, in Fig. 19, a point A denotes a location at which output inductor Lo in Fig. 1 is installed and R denotes the load.

In electric power conversion device 100 shown in Fig. 19, output inductor Lo is not installed as is different from Fig. 1. Hence, the output current is abruptly raised during the voltage step-down operation. Hereinafter, the details will be explained.
It should be noted that the explanation described below is based on an assumption such that direct current power supply is 336VDC, the voltage across load R is 200VDC, the operating frequency is 39kHz, the output power is 1kW.

Fig. 20 shows a graph representing the correlation between the drive signal and the current waveform at point A in the voltage step-down operation of electric power conversion device 100 in the comparative example.

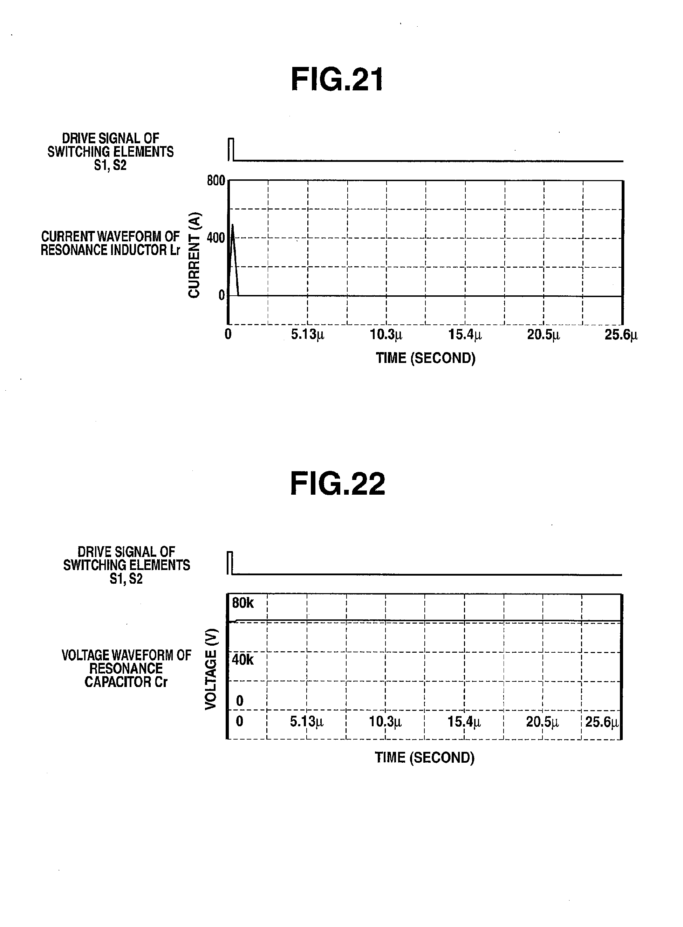

Fig. 21 shows a graph representing the correlation between the drive signal and the current waveform at point A in the voltage step-down operation of electric power conversion device 100 in the comparative example.
In the comparative example, there is no element suppressing a rise in the current in the voltage step-down operation and an abrupt current is caused to flow through load R. Even if the duty ratio of switching elements S1, S2 is extremely decreased to 0.01 in order to make the voltage step-down operation with recognition that the current is abruptly increased, the current is abruptly increased in a short circuit state and a peak current of 509A is caused to flow.
Therefore, as shown in Fig. 21, a current of resonance inductor Lr becomes large so that the current energy of resonance inductor Lr becomes large. This current energy of resonance inductor Lr is accordingly increased. This current energy is moved to resonance capacitor Cr when switching elements are turned off to increase the voltage in the extreme manner. This voltage is approximately 61kV at maximum so that it is practically difficult to step down the voltage.

Fig. 22 shows a graph representing a correlation between the drive signal and the voltage waveform of resonance capacitor Cr in the voltage step-down operation of electric power conversion device 100 in the comparative example.
As shown in Fig. 22, there is the same anxiety when a start up starting from the state in which output capacitor Co is not charged.
That is to say, output capacitor Co is charged to the power supply voltage or higher, the voltage step-down operation occurs during the start of the voltage boosting operation and there is an anxiety that an excessive current is caused to flow in the circuit and an excessively high voltage is developed across resonance capacitor Cr.

However, in electric power conversion device 1 in the preferred embodiment, output inductor Lo is provided. Thus, during the voltage step-down operation, output inductor Lo suppresses the rise in output current. Thus, the problem as described above does not occur.
It should be noted that, in the preferred embodiment, direct current power supply DC is used but this direct current power supply DC includes the direct current power supply in itself and includes an alternating current power supply to which a rectifying circuit is added and which functions in the same way as the direct current power supply.

In this way, according to electric power conversion device 1 in the preferred embodiment, output inductor Lo is provided. Hence, output inductor Lo suppresses the rise in the output current during the voltage step-down operation. Thus, an abrupt current flow does not occur and voltage remarkably exceeding the withstanding voltage of (each of) switching elements S1, S2 is not applied to switching elements S1, S2. Consequently, a situation such that these semiconductor elements are destroyed can be prevented. In addition, since the destructions of semiconductor elements are prevented, use of the semiconductor elements having high withstanding voltages are not needed to use and increase in losses in semiconductor elements can be prevented.
Furthermore, the voltage boosting operation and the voltage step-down operation can be realized by one stage circuit so that, without connection of two serially connected electric power conversion devices, the electric conversion device in this embodiment can achieve the loss, the size, and the cost.

In addition, the inductance value of primary winding Tra of transformer Tr is two times or more but ten times or less than the inductance value of resonance inductor Lr. It should be noted that, since inductance value of primary winding Tra of transformer Tr is ten times or less than the inductance value of resonance inductor Lr, such a situation that the sufficient output power cannot be obtained can be prevented.
Since the inductance value of primary winding Tra of transformer Tr is two times or more than the inductance value of resonance inductor Lr, such a situation that the voltage across resonance capacitor Cr becomes large so that the necessity of using the switching elements having high withstanding voltages can be eliminated.

Under such an operating condition that the output current flowing through output inductor Lo becomes maximum, resonance capacitor Cr has a capacitance such that at least one current of resonance inductor Lr and output inductor Lo gives zero when switching elements S1, S2 which has been turned off at the time of discharge of resonance capacitor Cr, the current flowing when switching elements S1, S2 are turned on can assuredly be zeroed. Thus, the zero current switch is achieved and the switching loss can be reduced.

In addition, since switching elements S1, S2 are operated at an operating frequency at which the current of output inductor Lo is discontinuous. The zero current switch can be achieved when switching elements S1, S2 are turned on during this discontinuous interval and the switching loss can be reduced.

In addition, the output electric power is controlled by adjusting an on time durations of a switching of switching elements S1, S2 within a range from a time duration during which a discharge of resonance capacitor Cr is started in response to an on state (conduction) of the switching elements and the discharge of the resonance capacitor is ended to a half of an operating period of an on-or-off control of switching elements S1, S2.
It should, herein, be noted that, in order to achieve the zero voltage switch while reducing the switching loss, it is necessary to turn on switching elements S1, S2 for a time during which at least resonance capacitor Cr ends the discharge. In addition, with the off interval taken into consideration, switching elements S1, S2 can be turned on provided half of the operating period of on-or-off control. Therefore, the on time is adjusted within the above-described range so that the zero voltage switch is achieved. While the zero voltage switch is achieved and the switching loss is reduced, the output power can be adjusted.

In addition, the output electric power of the deice is controlled by adjusting a number of switching pulses per unit time, the switching pulse being such that switching elements S1, S2 are turned on in response to an on state of the switching pulse to start a discharge of resonance capacitor Cr and switching elements S1, S2 are turned off in response to an off state of the switching pulse at the same time when the discharge of resonance capacitor Cr is ended.
It should herein be noted that, in order to realize the zero voltage switch while reducing the switching loss, it is necessary to turn on switching elements S1, S2 for the time duration during which at least resonance capacitor Cr ends the discharge. Therefore, switching elements S1, S2 are turned on for the time duration. By adjusting the number of on pulses per unit time, the zero voltage switch is achieved. While the switching loss is reduced, the output power can be adjusted.

Next, a second preferred embodiment of the electric power conversion device according to the present invention will be described. The electric power conversion device in the second embodiment is generally the same as the first embodiment but part of the structure and driving method is different from the first embodiment.
Hereinafter, difference points from the first embodiment will be described below.

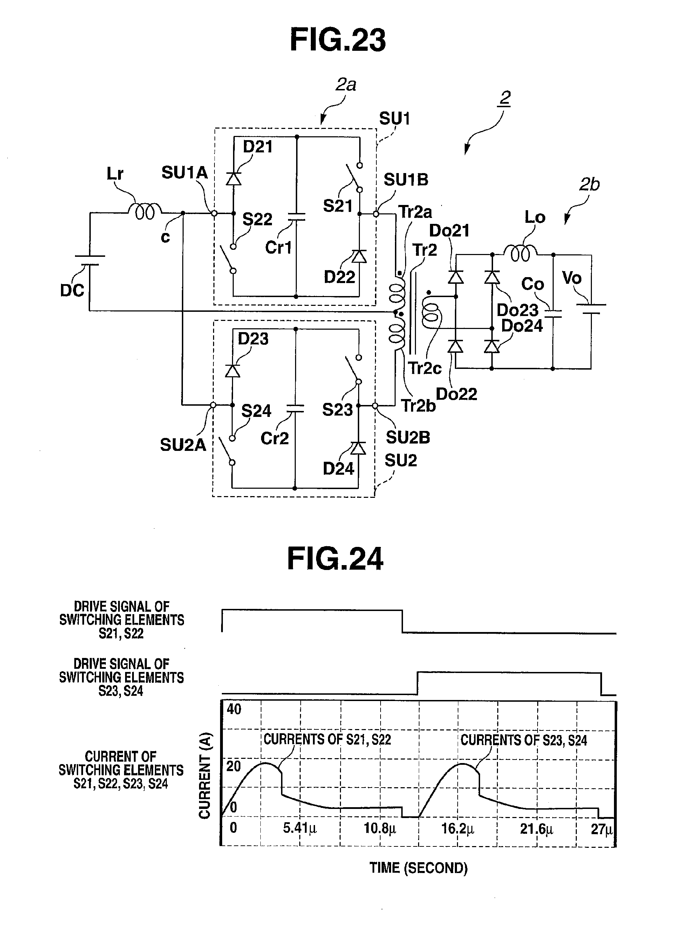

Fig. 23 shows a circuit wiring diagram representing electric power conversion device 2 related to the second embodiment.
The same reference numerals in Fig. 23 as those in the first embodiment designate like elements and detailed descriptions thereof will, herein, be omitted.
First, although the single switch unit SU in the first embodiment is provided, electric power conversion device 2 in the second embodiment has two switch units SU1, SU2 as shown in Fig. 23.

Specifically, the other end of resonance inductor Lr, in the second embodiment, is connected to a junction point c. Junction point c is branched, one branch being connected to an input terminal SU1A of first switch unit SU1 and the other branch being connected to an input terminal SU2A of second switch unit SU2. It should be noted that first and second switch units SU1, SU2 are the same structure as switch unit SU in the first embodiment.

In addition, transformer Tr2 in the second embodiment includes a first primary winding Tr2a and a second primary winding Tr2b. One end of first primary winding Tr2a is connected to an output terminal SU1B of first switch unit SU1 and the other end thereof is connected to a negative terminal of direct current power supply DC via a center tap thereof. In addition, second secondary winding Tr2b has one end connected to output terminal SU2B of second switch unit SU2 and the other end connected to the negative terminal of direct current power supply DC via the center tap.

Furthermore, in the second embodiment, secondary circuit 2b includes a full wave rectifying circuit having four diodes of first, second, third, and fourth diodes Do21 through Do24. Electric power conversion device 2 in the second embodiment can be operated by a push-pull rectifying circuit which is the same as in the first embodiment. However, the full wave rectifying circuit can reduce the voltage applied across each diode so that such diodes as having low rated voltages and low on resistances can be used.

It should be noted that electric power conversion device 2 related to the second embodiment has primary circuit 2a having no energy storing inductor Lt and no direct current blocking capacitor Ct. It should be noted that, as will be described later, since the current is caused to flow in a different winding direction alternately between first switch unit SU1 and second switch unit SU2, a bias magnetism of transformer Tr2 can be prevented.
Therefore, electric power conversion device 2 in the second preferred embodiment can eliminate energy storing inductor Lt and direct current blocking capacitor Ct.
Since energy storing inductor Lt supplies the electric power to transformer Tr2 during the off interval of switching elements, the inductance value of 400 µH is used for energy storing inductor Lt. The omission of such an inductor as described above can effectively contribute on a light-weight of the device.

Next, a basic operation of electric power conversion device 2 in the second embodiment will be described. At an initial stage, switching elements S1 through S24 are in off states and resonance capacitors Cr1, Cr2 of respective switch units SU1, SU2 are in the charged states.

Then, the control section outputs the on signal to respective switching elements S21, S22 to turn on switching elements S21, S22. At this time, the current phase is delayed by means of resonance inductor Lr so that zero current switch is achieved by means of switching elements S21, S22.

In addition, at this time, a voltage which is an addition of direct current power supply DC and the voltage across resonance capacitor Cr1 is applied to a serial circuit of a primary winding Tr2a of transformer Tr2.

A voltage applied to first primary winding Tr2a of transformer Tr2 is transmitted to a primary side, rectified by means of first through fourth rectifying diodes Do21 through Do24, and is applied to output inductor Lo and output capacitor Co.

It should be noted that, during the above-described operation, resonance inductor Lr and output inductor Lo are charged. Furthermore, during the discharge of resonance capacitor Cr1, the voltage across resonance capacitor Cr1 is left so that first and second diodes D21, D22 are reversely biased and no current is caused to flow through diodes D21, D22.

Thereafter, when the discharge of resonance capacitor Cr1 is ended, the reverse biased states of diodes D21, D22 are eliminated and the current is started to flow through diodes D21, D22. Direct current power supply DC provides the voltage for resonance inductor Lr and first primary winding Tr2a of transformer Tr2 and continues to charge these resonance inductor Lr and first primary winding Tr2a.

Next, the control section turns off switching elements S1, S2. Thus, the energy stored in resonance inductor Lr is moved into resonance capacitor Cr1 via first and second diodes D21, D22 to raise the voltage of resonance capacitor Cr1.
It should, herein, be noted that a maximum voltage applied to first and second switching elements S21, S22 is the same as the voltage across resonance capacitor Cr1 if forward direction drop voltages across first and second diodes are approximately zero. In addition, the voltage rise of resonance capacitor Cr1 is delayed at a timing of the turn off of first and second switching elements S21, S22. Therefore, the zero voltage switch can be achieved at first and second switching elements S21, S22.

It should be noted that, as described above, in a case where first switch unit SU1 is in the on-or-off controlled and second switch unit SU2 is in a wait (standby) state not in the on-or-off control.

The above-described matter indicates a half cycle of electric power conversion device 2 in the above-described second embodiment. In electric power conversion device 2 in the second embodiment, at the next half cycle, third and fourth switching elements S23, S24 of second switch unit SU2 are in the on-or-off controlled in the same way as first switch unit SU1. At this time, first switch unit SU1 is in the wait state not in the on-or-off control. It should be noted that the operation in the on-or-off control of second switch unit SU2 is the same as first switch unit SU1.

As described above, in electric power conversion device 2 in the second embodiment, switch unit SU1 and switch unit SU2 cause the current alternately to flow into the different primary windings Tr2a, Tr2b of transformer Tr2.

In a case where switching elements S21, S22 are turned on in the above-described operation and in a case where switching elements S23, S24 are turned on, a voltage higher than direct current power supply DC is applied to the primary side of transformer Tr2 due to the discharge of resonance capacitor Cr1, Cr2. Hence, even if the winding ratio of transformer Tr2 is 1:1, the higher voltage than direct current power supply DC is applied to load Vo connected in parallel to output capacitor Co so that the voltage boosting operation can be achieved. In addition, in the voltage step-down operation, the time duration during which switching elements S21 through S24 can be shortened so that the voltage boosting operation can be achieved.

The basic driving method has been described above. Next, the voltage boosting operation of electric power conversion device 2 in the second embodiment will be explained. When the above-described voltage boosting operation is carried out, electric power conversion device 2 carries out either one of the pulse width modulation control or the pulse density modulation control.

An example in a case where electric power conversion device 2 carries out the voltage boosting operation through the pulse width modulation control will be explained. It should be noted that the circuit constants of respective elements, in this example, are adopted as shown in Table 3.

**[Table 3]**

| | |
|---|---|
| resonance inductor Lr | 30 *µ*H |
| resonance capacitor Cr1, Cr2 | 56nF |
| transformer Tr2 | 250 *µ*H |
| output inductor Lo | 91 *µ*H |
| output capacitor Co | 100 *µ*H |

Furthermore, this example shows a case where direct current power supply DC of 80VDC is boosted to supply electric power of 1kW to load Vo of 400VDC simulated as a battery load. The operating condition of switching elements S21 through S24 is such that the operating frequency is 37kHz and the duty ratio is 0.46.

At first, in the second embodiment, the zero current switch and the zero voltage switch are achieved. Fig. 24 shows a graph representing the correlation between the drive signal of electric power conversion device 2 in the second embodiment and the current waveforms of switching elements S21 through S24. As described above, since electric power conversion device 2 in the second embodiment includes resonance inductor Lr in primary circuit 2a, the phase delay (lag) of the current occurs. Therefore, as shown in Fig. 24, since currents of switching elements S21 through S24 rise gradually from on states of drive signals of switching elements S21 through S24. Since the current is zero at the time of on states of the drive signals, the zero current switch is achieved and the switching loss is accordingly reduced.

It should be noted that, in order to achieve the zero current switch, it is necessary for at least one current of resonance inductor Lr and output inductor Lo to be zero at a time point at which switching elements S21 through S24. That is to say, it is necessary to be as shown in Table 4.

**[Table 4]**

| | Condition 1 | Condition 2 | Condition 3 | Condition 4 |
|---|---|---|---|---|
| Resonance inductor Lr | current =0 | current >0 | current =0 | current >0 |
| output inductor Lo | current =0 | current =0 | current >0 | current >0 |
| zero current switch | O | O | O | X |

Hereinafter, the details of the zero current switch will be explained. The zero current switch will be explained by referring to a simulation example under a condition such that the input voltage is 80VDC, an output voltage is 200V, an output power is 1kW, and the duty ratio is 0.49 using electric power conversion device 2 of the circuit constants shown in Table 3. An output current of electric power conversion device 2 in the second embodiment under this operating condition provides a maximum. This simulation corresponds to a condition 2 shown in Table 4.

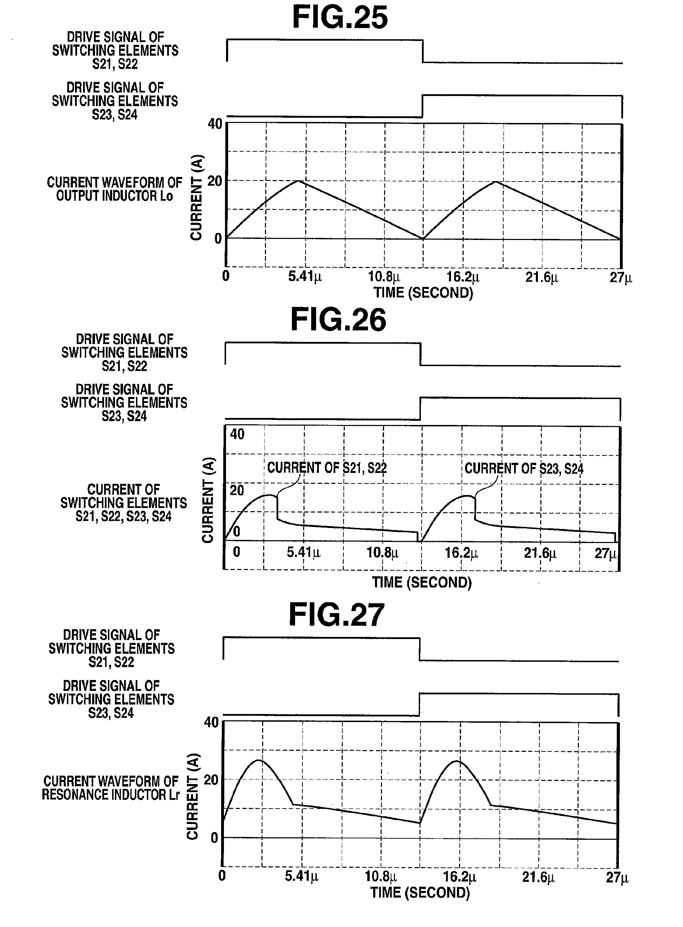

Fig. 25 shows a graph representing the correlation between the drive signal and the current waveform of output inductor Lo in electric power conversion device 2 in the second embodiment.
In addition, Fig. 26 shows the graph representing the correlation between the drive signal and current waveforms between switching elements S21 through S24.
As shown in Fig. 25, a critical discontinuous state occurs such that the current of output inductor Lo is zeroed when the drive signal of switching elements S21, S22 is in the on state and the current of output inductor Lo is zeroed when the drive signal of switching elements S23, S24 is in the on state. Therefore, as shown in Fig. 26, the current of switching elements S21 through S24 is zeroed. Even under the operating condition under which the output current is maximum, the zero current switch can be realized.

It should be noted that the current of resonance inductor Lr in this case is shown in Fig. 27. Fig. 27 shows a graph representing the correlation between the drive signal and the current waveform of resonance inductor Lr in electric power conversion device 2 in the second embodiment. As shown in Fig. 27, the current is always caused to flow through resonance inductor Lr so that the current at the time of on state of the drive signal is a value exceeding 0. However, as shown in Fig. 25, since the current of output inductor Lo is zeroed when the drive signal is in the on state, the zero current switch is achieved.

It should, herein, be noted that, as shown in Fig. 25, whether the current of output inductor Lo is zero during the turn on of switching elements S21 through S24 is dependent upon a capacitance of resonance capacitor Cr and the operating frequency of switching elements S21 through S24.

If the capacitances of resonance capacitors Cr1, Cr2 are increased, a large output power can be taken out. However, a time duration during which the current of output inductor Lo becomes zero becomes shorter and, at last, the current does not become zero.
In the same way, when the operating frequency described above is raised, although the large output power can be taken out, the time duration during which the current of output inductor Lo is zero becomes shorter and, at last, the current does not become zero.

Therefore, in a case of the maximum output current, the capacitance of resonance capacitor Cr and the operating frequency of switching elements S21 through S24 are set so that the current of output inductor Lo during the turn on of switching elements S21 through S24 indicates at least zero. Especially, in this embodiment, the inductance of output inductor Lo and the operating frequency are set so that the current of output inductor Lo becomes critically discontinuous. Specifically, in this embodiment, the capacitance of resonance capacitor Cr was 56nF as shown in Table 3 and the operating frequency of switching elements S21 through S24 was 37kHz. In the other operating region, the control is carried out so that the operating frequency is equal to or lower than 37kHz and the current of output inductor Lo becomes accurately be discontinuous.

Next, the details of the zero voltage switch will be explained.

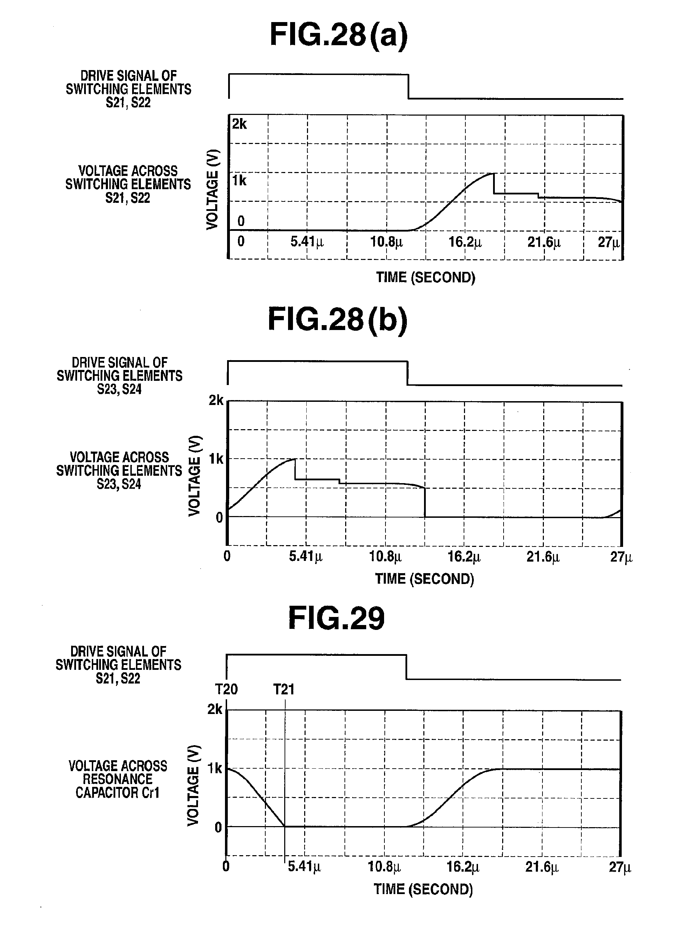

Figs. 28(a) and 28(b) show the graphs representing the correlation between the drive signal and the voltage waveform of respective switching elements S21 through S24, Fig. 28(a) representing the voltage across (each of) first and second switching elements S21, S22 and Fig. 28(b) representing the voltage across (each of) third and fourth switching elements S23, S24.
As described above, electric power conversion device 2 in the second embodiment is provided with resonance capacitors Cr1, Cr2 in primary circuit 2a. Therefore, as shown in Figs. 28(a) and 28(b), the voltage across (each of) switching elements S21, S22 is gradually raised in response to the off state of the drive signal and the voltage across (each of) switching elements S23, S24 is gradually raised in response to the off state of the drive signal. Hence, at the time point of off state of the drive signal, the voltage is zero so that the zero voltage switch is achieved and the switching loss is accordingly reduced.

It should be noted that, in order to achieve the zero voltage switch, it is necessary for the discharge of resonance capacitor Cr to be completed at the time of the off state of the drive signal. Fig. 29 shows a graph representing the correlation between the drive signal for switching elements S12, S22 of electric power conversion device 2 in the second embodiment and the voltage waveform of resonance capacitor Cr1.

As described above, resonance capacitor Cr1 starts the discharge when the drive signal is turned on. Therefore, as shown in Fig. 29, when the drive signal is in the on state (the drive signal is turned on) at a time T20, the voltage of resonance capacitor Cr1 is lowered. Then, at a time T21, the discharge of resonance capacitor Cr1 is completed. Therefore, it is necessary for switching elements S21, S22 to be turned on for the time duration or longer from the start of the discharge of resonance capacitor Cr1 to an end of the discharge thereof.

It should be noted that switching elements S21, S22 may be turned on for the predetermined time or longer but, with an off interval of switching elements S21, S22 taken into consideration, within a range of half of the operating cycle of on-or-off control of switching elements S21, S22, the on time duration of the switching is adjusted. This adjustment permits the control for the output power in electric power conversion device 2 in the second embodiment.
Furthermore, first and second switching elements S21, S22 are exemplified as described above but the same is applied equally to third and fourth switching elements S23, S24.

Next, the voltage boosting operation by means of the pulse density modulation control will be explained.
First, as explained with reference to Fig. 29, it is necessary for a pulsewidth of the drive signal to be equal to or longer than a time from a time T20 to a time T21. Therefore, a pulsewidth of an on time from time T20 to time T21 is a minimum pulsewidth by which the zero voltage switch is obtained. Therefore, the pulsewidth having an on time duration from time T20 to time T21 is a minimum pulsewidth by which the zero voltage switch can be obtained. Therefore, in the pulse density modulation control, with the above-described minimum pulsewidth as one pulse, the number of pulses (namely, the density) per unit time are adjusted. This adjustment of the number of pulses can control the output power.

Especially, the pulse density modulation control is effective in a case where the voltage of direct current power supply DC is high.
This is because even in a case where the same output power is obtained, if the input voltage is high, it is necessary to narrow the pulsewidth.

In a case where, in electric power conversion device 2 in the second embodiment, the voltage is boosted from direct current power supply DC of 336VDC to direct current constant voltage load Vo of 400V, the drive signal and current and voltage waveforms to obtain output power of 1kW will be explained.

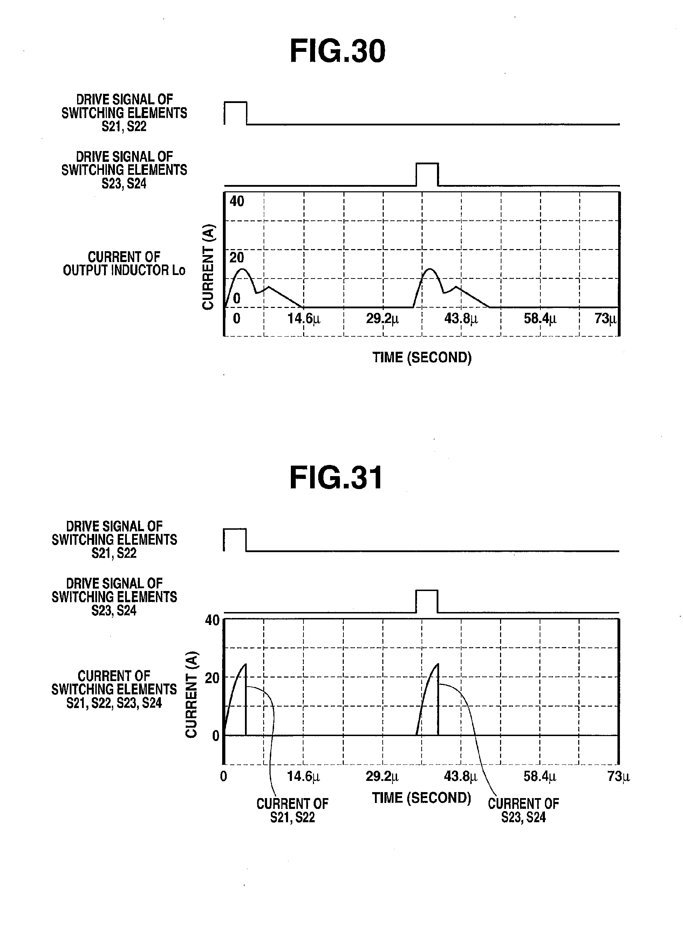

Fig. 30 shows a graph representing the drive signal and the current waveform of output inductor Lo when the output power of 1kW is obtained in a case where the voltage is boosted from direct current power supply DC of 336VDC to direct current constant voltage load Vo of 400V. As shown in Fig. 30, the current of output inductor Lo is gradually raised during an interval during which the drive signal of first and second switching elements S21, S22 is turned on and gradually lowered when the drive signal is turned off. In addition, the current of output inductor Lo is gradually raised during the interval during which the drive signal of third and fourth switching elements S23, S24 is turned on and gradually lowered when the drive signal is turned off.

Fig. 31 shows a graph representing the drive signal and current waveforms of switching elements S21 through S24 when the output power of 1kW is obtained in a case where the voltage is boosted from direct current power supply DC of 336VDC to direct current constant voltage load Vo of 400V. As shown in Fig. 31, the currents flowing through switching elements S21, S22 are gradually raised in response to the on state of the drive signal and becomes zero when the drive signal is turned to the off state. In addition, the currents are zeroed when the drive signal is in the on state. Similarly, the currents of switching elements S23, S24 are gradually raised in response to the on state of the drive signal and zeroed in response to the off state of the drive signal.

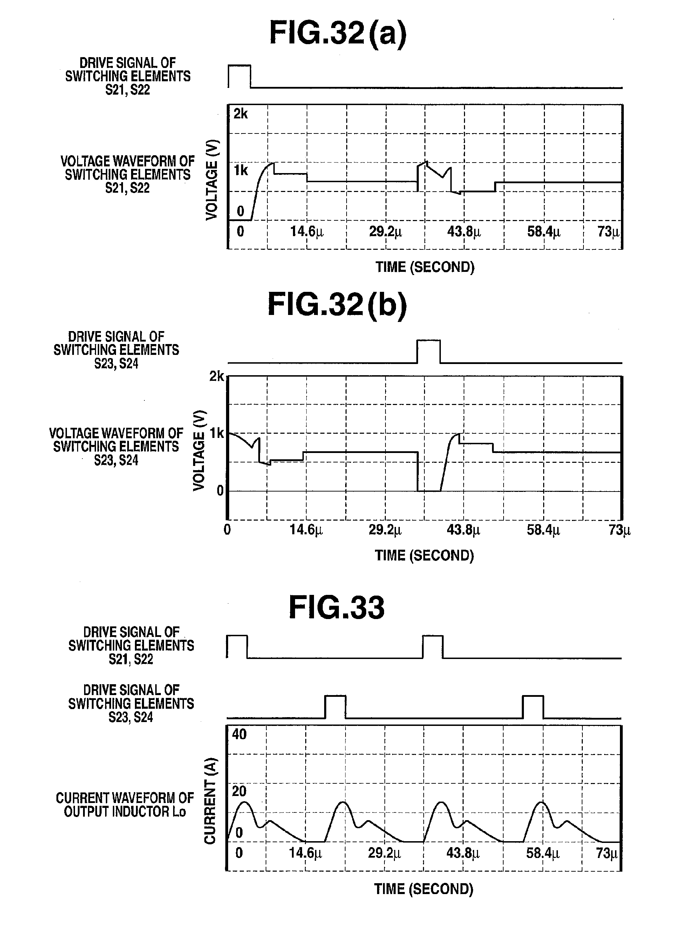

Figs. 32(a) and 32(b) show the drive signal and the voltage waveforms of switching elements S21 through S24 when the output power of 1kW is obtained in a case where the voltage is boosted from direct current power supply DC of 336VDC to direct current constant voltage load Vo, Fig. 32(a) representing the voltage across (each of) switching element S21, S22 and Fig. 32(b) representing the voltage across (each of) switching elements S23, S24.
As shown in Fig. 32(a), the voltage across (each of) switching elements S21, S22 is gradually raised when the drive signal is turned off and is stable in the proximity of the charged voltage of resonance capacitor Cr1. In addition, as shown in Fig. 32(b), the voltage of (each of) switching elements S23, S24 is gradually raised when the drive signal is turned off and, thereafter, becomes stable in the proximity of the charged voltage of resonance capacitor Cr2.

Next, the drive signal and the current and voltage waveforms when the output power of 2kW is obtained in a case where the voltage is boosted from direct current power supply DC of 336VDC to direct current constant voltage load Vo of 400V will be explained.

Fig. 33 shows the graph representing the drive signal and the current waveform of output inductor Lo in a case where the voltage is boosted from direct current power supply DC of 336VDC to direct current constant voltage load Vo of 400V. Since the drive signal is twice turned on at the same interval of Fig. 30, in the case of Fig. 33, rise and lowering of the current of output inductor Lo is repeated four times at this interval.

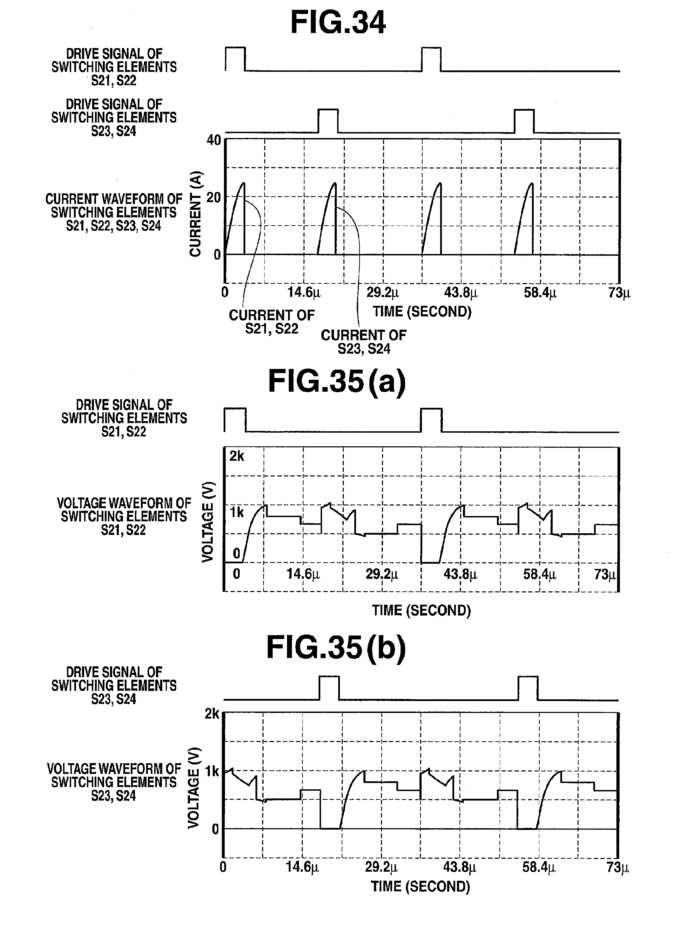

Fig. 34 shows a graph representing the drive signal and the current waveform of switching elements S21 through S24 when the output power of 2kW is obtained in a case where the voltage is boosted from direct current power supply of 336VDC to direct current constant voltage load Vo of 400V.
In a case of Fig. 34, the drive signal is twice turned on at the same interval as Fig. 31. Hence, four current waveforms of switching elements S21 through S24 are obtained, each waveform being such that, when the drive signal is turned on, the current waveform is gradually raised and, when the drive signal is turned off, the current waveform is zeroed.

Figs. 35(a) and 35(b) show graphs representing the drive signal and voltage waveforms of switching elements S21 through S24 when the output power of 2kW is obtained in a case where the voltage is boosted from direct current power supply DC of 336VDC to direct current constant voltage load Vo of 400V, Fig. 35(a) representing the voltage across (each of) switching elements S21, S22 and Fig. 35(b) representing the voltage across (each of) switching elements S23, S24.
In the case of Figs. 35(a) and 35(b), the drive signal is twice turned on at the same interval of time as Figs. 32(a) and 32(b). In the case of Fig. 35(a), two voltage waveforms of switching elements S21, S22 such that the voltage is gradually raised when the drive signal is turned off and, thereafter, becomes stable in the proximity of the charged voltage of resonance capacitor Cr1 are obtained in the same way as Fig. 32(a). In addition, for Fig. 35(b), two voltage waveforms of switching elements S23, S24 are obtained such that the voltage is gradually raised when the drive signal is turned off and, thereafter, becomes stable in the proximity of the charged voltage of resonance capacitor Cr2 in the same way as Fig. 32(b).

It should be noted that the operating frequency is 14kHz in a case of output power of 1kW and is 28kHz in a case of output power of 2kW.

In this way, in the pulse density modulation control, the voltage boosting operation can be carried out by adjusting the number of pulses per unit time.
In addition, as shown in Figs. 30 and 33, since the number of current pulses flowing through output inductor Lo are twice, the output power can be twice. That is to say, since the number of pulses per unit time are increased or decreased, the output power can be controlled.

In addition, in the pulse density modulation control, the phase delay of the current occurs by means of resonance inductor Lr so that, as shown in Figs. 31 and 34, the zero current switch is achieved. Furthermore, the on time of a single pulse in the pulse density modulation control is provided with a minimum pulsewidth as shown in Fig. 29. Therefore, as shown in Figs. 32(a), 32(b), 35(a), and 35(b), the zero voltage switch is achieved.

The voltage boosting operation has been described. It should be noted that, in the voltage boosting operation, a relationship of an inductance value of (each of) primary windings Tr2a, Tr2b of transformer Tr2 and the inductance value of resonance inductor Lr is important. This relationship is the same as described with reference to Fig. 14.

Next, the voltage step-down operation of electric power conversion device 2 in the second embodiment will be explained.
As described above, electric power conversion device 2 in the second embodiment achieves the zero current switch and the zero voltage switch in the case of the voltage step-down operation. In the voltage step-down operation, the basic driving method is the same as the voltage boosting operation. However, in the voltage step-down operation, if the time duration (time interval) during which switching elements S21 through S24 are turned on is made shorter, the time duration during which output inductor Lo is charged becomes shorter and the electrical power to move to load Vo is accordingly small.

Next, the current and voltage waveforms of respective elements in a case where electric power conversion device 2 carries out the voltage step-down operation will be explained. It should be noted that, in this example, circuit constants of respective elements shown in Table 3 are adopted. This example is a case where the voltage step-down operation is carried out from direct current power supply DC of 336VDC to load Vo of 200VDC and the output power of 1kW is supplied. The operating frequency of switching elements S1, S2, at this time, is 14kHz.

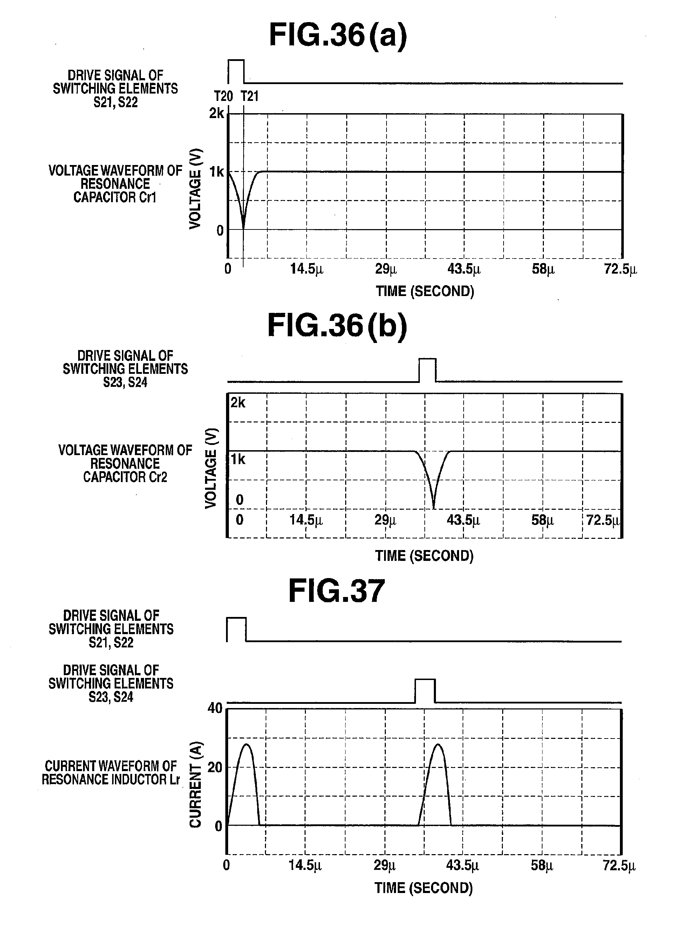

Figs. 36(a) and 36(b) show graphs representing the correlation of the drive signal and voltage waveforms of resonance capacitors Cr1, Cr2 in the voltage step-down operation of electric power conversion device 2 in the second embodiment, Fig. 36(a) representing the voltage across resonance capacitor Cr1 and Fig. 36(b) representing the voltage across resonance capacitor Cr2. In addition, Fig. 37 shows the graph representing the drive signal and the current waveform of resonance inductor Lr in the voltage step-down operation of electric power conversion device 2 in the second embodiment.

When, as shown in Fig. 36(a), switching elements S21, S22 in the voltage step-down operation are turned on, the voltage across resonance capacitor Cr1 is gradually lowered and, when switching elements S21, S22 are turned off, the voltage across resonance capacitor Cr1 is gradually raised. At this time, the voltage across resonance capacitor Cr1 was suppressed to 974V. In addition, in the same way about Fig. 36(b), when switching elements S23, S24 are turned on, the voltage across resonance capacitor Cr2 is gradually lowered and when switching elements S23, S24 are turned off, the voltage across resonance capacitor Cr2 is gradually raised. At this time, the voltage across resonance capacitor Cr2 is gradually raised. At this time, the voltage across resonance capacitor Cr2 was suppressed to 974V. These voltage values indicate that switching elements S21, S22 and diodes D21, D22 whose withstanding voltages of 1200V or 1500V class can be applied and can be operated without destruction of these switching elements. In addition, as shown in Fig. 37, the current of resonance inductor Lr at this time was about 28A at maximum.

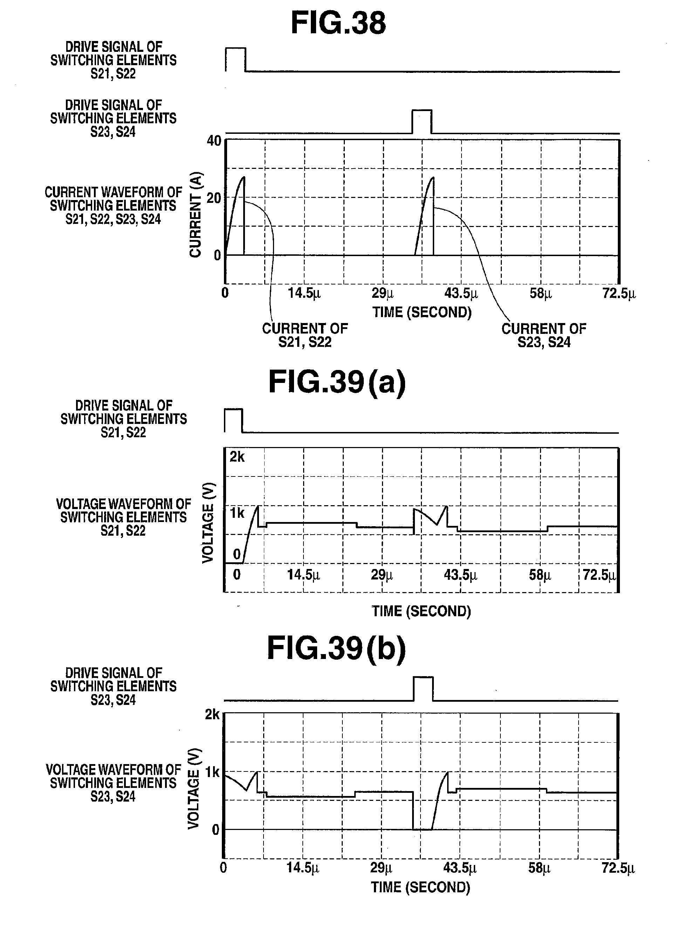

Fig. 38 shows a graph representing the correlation between the drive signal and the current waveforms of switching elements S21 through S24 in the voltage step-down operation of electric power conversion device 2 in the second embodiment.
As shown in Fig. 38, the current of (each of) switching elements S21 through S24 is gradually raised in response to the on state of the drive signal. The current at the time of on state of the drive signal is zero so that the zero current switch is achieved and the switching loss is accordingly reduced.

Figs. 39(a) and 39(b) show graphs representing the correlation between the drive signal and voltage waveforms of switching elements S21 through S24 in the voltage step-down operation of electric power conversion device 2 in the second embodiment, Fig. 39(a) representing the voltage across (each of) switching elements S21, S22 and Fig. 39(b) representing the voltage across (each of) switching elements S23, S24.
As shown in Fig. 39(a), the voltage across (each of) switching elements S21, S22 is gradually raised in response to the off state of the drive signal and the voltage is zeroed in response to the off state of the drive signal.
As shown in Fig. 39(b), the voltage across (each of) switching elements S23, S24 is gradually raised in response to the off state of the drive signal and the voltage at the time of the off state is zero in the same way as the case of Fig. 39(a).
Thus, the zero voltage switch is achieved and the switching loss is accordingly reduced.

In this way, according to electric power conversion device 2 in the second embodiment, in the same way as the first embodiment, the destruction of the semiconductor elements can be prevented from occurring and the reductions of loss, dimension, and cost can be achieved.

Furthermore, in the same way as the first embodiment, such a situation that the voltage across resonance capacitor Cr becomes large so that it becomes necessary to use the switching elements having superior withstanding voltage can be avoided.

In addition, when, under an operating condition such that the output current flowing through output inductor Lo becomes maximum, resonance capacitors Cr1, Cr2 have the capacitances such that at least one of currents of resonance inductor Lr and output inductor Lo is zeroed when switching elements S21 through S24 are turned on which are in the off state when resonance capacitors Cr1, Cr2 are discharged. Hence, the current flow when switching elements S21 through S24 are turned on can be zeroed so that zero current switch is achieved and the switching loss can accordingly be reduced.

In addition, during the discontinuous interval of time, the switching elements are turned on so that the zero current switch can be realized and the switching loss can be reduced. In addition, since the zero voltage switch is achieved and, while the switching loss is reduced, the output (electric) power can be adjusted.

In addition, in the second embodiment, two switch units SU1, SU2 are provided. Hence, these units are alternately operated so that an effective operating frequency can be two times and the charge interval of resonance inductor Lr can be halved. The voltage generated in switching elements S21 through S24 during the voltage boosting operation can be suppressed to be about half.

The on-or-off control of first switch unit SU1 and the on-or-off control of second switch unit SU2 are alternately executed. Hence, the currents flowing through primary windings Tr2a, Tr2b of transformer Tr2 can be cancelled. Thus, the prevention of the bias magnetism of transformer Tr2 becomes easy and the reliability can be enhanced.

Next, a third preferred embodiment according to the present invention will be described. Electric power conversion device 3 in the third embodiment is generally the same as the first embodiment but part of the structure and driving method is different from the first embodiment. Hence, the difference point from the first embodiment will be explained.

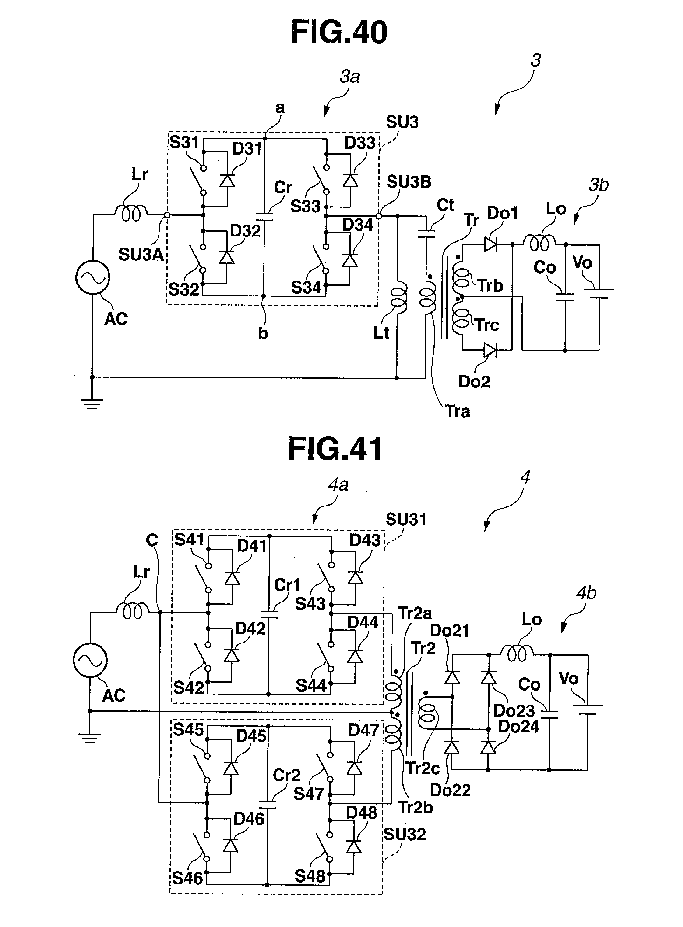

Fig. 40 shows a circuit configuration view representing electric power conversion device 3 in the third embodiment. As shown in Fig. 40, electric power conversion device 3 in the third embodiment is equipped with an alternating current power supply AC in place of direct current power supply DC. In addition, switch unit SU3 in the third embodiment includes first through fourth switching elements S31 through S34, first through fourth flywheel (reverse-conducting) diodes D31 through D34, and resonance capacitor Cr.

In more details, switch unit SU3 includes parallel two signal lines connected from input terminal SU3A to output terminal SU3B and first and third switching elements S31, S33 are provided serially to one of the two signal lines and are conducted in response to the input of the on signal. In addition, second and fourth switching elements S32, S34 are serially connected to the other of the two signal lines and are conducted in response to the input of the on signal.

In addition, resonance capacitor Cr is interposed between a junction point a between first switching element S31 and third switching element S33 and a junction point b between second switching element S32 and fourth switching element S34.

First flywheel diode D31 has the anode connected to input terminal SU3A and has the cathode connected to output terminal SU3B. Flywheel diode D31 is connected in parallel to first switching element S31. Second flywheel diode D32 has the cathode connected to input terminal SU3A side and has the anode connected to output terminal SU3B side. Second flywheel diode D32 is connected in parallel to second switching element S32.

Third flywheel diode D33 has the cathode connected to input terminal SU3A side and has the anode connected to output terminal SU3B side. Third flywheel diode D34 is connected in parallel to third switching element S33. Fourth flywheel diode D34 has the cathode connected to input terminal side SU3A and the anode connected to output terminal SU3B side. Fourth flywheel diode D34 is connected in parallel to fourth switching element S34.

It should be noted that these flywheel diodes D31 through D34 are built into respectively parallel connected switching elements S31 through S34 to form the integrated type switching elements.

Next, the driving method of electric power conversion device 3 in the third embodiment will be explained. The basic driving method is the same as the first embodiment. However, since electric power conversion device 3 in the third embodiment is equipped with alternating current power supply AC, electric power conversion device 3 in this embodiment is operated as follows:

First, in a state in which alternating current power supply AC applies the positive voltage to resonance inductor Lr, the control section performs on-or-off drive for second and third switching elements S31, S34 in the same way as switching elements S1, S2 in the first embodiment. On the other hand, the control section keeps first and fourth switching elements S31, S34 in the off state. Thus, the current is not caused to flow through first and fourth switching elements S31, S34 and second and third flywheel diodes D32, D33. Thus, the same circuit structure is taken as the first preferred embodiment. The electric power conversion can be carried out in the same way as the first embodiment and the same advantages can be obtained.

It should be noted that when, in this case, the discharge of resonance capacitor Cr is completed, the reversed bias state is eliminated so that first and fourth flywheel diodes D31, D34 are changed from a non-conduct state to a conduct state. In the third embodiment, the control section transmits the on signal to first and fourth switching elements S31, S34 in synchronization with the timing of this conduction so that these switching elements S31, S34 are turned on. This permits a resistance when flywheel diodes D31, D34 are conducted to be a parallel resistance with switching elements D31, S34. The loss at the time of the conduction of the flywheel diodes can be reduced.

Next, in a state in which alternating current power supply AC applies a negative voltage to resonance inductor Lr, the controller performs the on-or-off drive to first and fourth switching elements S31, S34 and maintains second and third switching elements S32, S33 in the off state. Thus, the current does not flow through second and third switching elements S31, S33 and first and fourth flywheel diodes D31, D34. Except that the current direction of the primary side is reversed, the same operation as the first embodiment is resulted. In addition, the reversed bias state is eliminated, second and third switching elements S32, S33 are turned on in synchronization with the timing at which second and third flywheel diodes D32, D33 are switched from the non-conduct state to the conduct state in the same way as described above.

It should be noted that since the primary side has rectifying diodes Do1, Do2 which rectify the alternating current, the output current direction is not reversed.

In this way, according to electric power conversion device 3 in the third embodiment, the situation in which the semiconductor elements are destroyed can be prevented. In addition, two electric power conversion devices are not connected serially and the reductions of loss, size, and cost can be achieved.

Furthermore, in the same way as the first embodiment, such a situation that the voltage across resonance capacitor Cr becomes large so that it becomes necessary to use the switching elements, each having a high withstanding voltage, can be avoided. In addition, the zero current switch is achieved so that the switching loss can accordingly be reduced.

In addition, during the discontinuous interval of time, the turn on of the switching elements is carried out so that the zero current switch is achieved and the switching loss can accordingly be reduced.

In addition, while the zero voltage switch is achieved to reduce the switching loss, the output power can be adjusted.

In addition, according to the third embodiment, four switching elements S31 through S34 and four flywheel diodes D31 through D34 permit a bi-directional current switching. Hence, it is not necessary to use the rectifying circuit in input for the alternating current- to- direct current conversion. Hence, the loss generated in the rectifying circuit can be reduced.

In addition, since flywheel diodes D31 through D34 are used as the integrated (type) switching elements in which flywheel diodes D31 through D34 are built in switching elements S31 through S33, the integrated type switching elements can contribute on the reductions of the size and cost.

Furthermore, switching elements S31 through S34 which are connected in parallel to respective flywheel diodes D31 through D34 are turned on in synchronization with a timing at which respective flywheel diodes D31 through D34 are switched to a conduction state, the switching elements S31 through S34 are connected in parallel to the respective flywheel diodes D31 through D34. Thus, resistances when flywheel diodes D31 through D34 are conducted can be the parallel resistances with respective switching elements S31 through S34 so that the loss during the conduction can be reduced.

Next, a fourth preferred embodiment according to the present invention will be explained. The power conversion device in the fourth embodiment is the same as described in each of the first, second, and third embodiments. However, part of the structure and driving method is different from the above-described first, second, and third embodiments.

Fig. 41 shows a circuit block diagram (configuration view) representing electric power conversion device 4 in the fourth preferred embodiment. As shown in Fig. 41, electric power conversion device 4 in the fourth embodiment is provided with alternating current power supply AC in place of direct current power supply DC in the same way as the third embodiment.

In addition, in the fourth embodiment, two switch units SU31, SU32 are provided in the same way as the second embodiment.
First switch SU31 is the same as the third embodiment and includes: first through fourth switching elements S41 through S44; first through fourth switching elements S41 through S44; first through fourth flywheel diodes D41 through D44; and resonance capacitor Cr1. In addition, second switch unit SU32 is the same as that in the third embodiment and includes: fifth through eighth switching elements S45 through S48; fifth through eighth flywheel diodes D45 through D48; and resonance capacitor Cr2.

The other structure is the same as second preferred embodiment.

Next, the driving method of electric power conversion device 4 in the fourth embodiment will be explained. First, when alternating current power supply AC applies the positive voltage to resonance inductor Lr, the control section performs the on-or-off control for first switch unit SU31. At this time, the control section performs the on-or-off drive for second and third switching elements S42, S43 in the same way as the first embodiment. On the other hand, the control section maintains fifth and eighth switching elements S45, S48 in the off state. It should be noted that first switch unit SU31 is in a stand-by state.

Next, the control section performs the on-or-off control for second switch unit SU32. At this time, the control section performs the on-or-off drive for sixth and seventh switching elements S46, S47 in the same way as switches S1, S2 in the first embodiment. On the other hand, the control section maintains fifth and eighth switching elements S45, S48 in an off state. It should be noted that, in the above-described case, first switch unit 31 is in the stand-by state.

Thus, on operation, the fourth embodiment has the same circuit structure as the second embodiment. Therefore, in the same way as the second embodiment, the electric power conversion can be carried out and the fourth embodiment has the same advantages as the second embodiment.

On the other hand, in a state in which alternating power supply AC applies a negative voltage to resonance inductor Lr, the control section performs the on-or-off control for first switch unit SU31. At this time, the control section performs the on-or-off drive for first and fourth switching elements S41, S44 and maintains second and third switching elements S42, S43 in the off state. It should be noted that, in the above-described case, second switch unit SU32 is in the stand-by state.

Next, the control section performs the on-or-off control for second switch unit SU32. At this time, the control section performs an on-or-off drive for fifth and eighth switching elements S45, S48 and maintains sixth and seventh switching elements S46, S47 in the off state.
It should be noted that, in the above described case, first switch unit SU31 is in the stand-by state.

Thus, on operation, the power conversion can be performed in the same way as the second embodiment except a case where the current direction of the primary side is reversed and the same advantages can be obtained.

In this way, according to electric power conversion device 4 in the fourth embodiment, in the same way as the second embodiment, the situation in which the semiconductor elements are destroyed can be prevented. In addition, since two electric power conversion devices are not serially connected, the loss, size, and cost reductions can be achieved.

In addition, at the time of voltage boosting operation, the voltages generated on switching elements S41 through S48 can be suppressed to be approximately half.

In addition, it is not necessary to use the rectifying circuit in the input circuit for the alternating current to direct current conversion. Thus, a loss generated in the rectifying circuit can be reduced.

In addition, since flywheel diodes D41 through D48 are built into corresponding switching elements S41 through S48 to form integrated switching elements, these integrated switching elements can contribute on the reductions of size and cost.

Furthermore, it is not necessary to use the switching elements having the high withstanding voltages since the voltages applied to resonance capacitors Cr1, Cr2 are not so large.

In addition, since the zero current switch is realized, the switching loss can be reduced. In addition, the bias magnetism of transformer Tr2 becomes easy so that the reliability can be enhanced.

Furthermore, the resistances when flywheel diodes D41 through D48 are conducted can be the parallel resistances of switching elements S41 through S48, the loss during the time of the conduction of the flywheel diodes can be reduced.

In addition, when, during the discontinuous interval of time, the switching elements are turned on, the zero current switch is realized and the switching loss can be reduced. In addition, while the zero voltage switch is achieved to reduce the switching loss, the output electric power can be adjusted.

The present invention has been explained on a basis of the preferred embodiments. However, the present invention is not limited to the above-described preferred embodiments. The modifications may be added without departing from the scope and gist of the present invention and a combination of the respective embodiments may be made.

## Claims

1. An electric power conversion device, comprising:
a primary circuit including: a first inductor having one end side connected to a positive terminal of a direct current power supply; a switch unit having an input terminal and an output terminal, the input terminal of the switch unit being connected to the other end side of the first inductor; and a primary winding of a transformer, one end side of the primary winding being connected to the output terminal of the switch unit and the other end side of the primary winding being connected to a negative terminal of the direct current power supply; and
a secondary circuit supplying an electric power to the primary winding of the transformer to supply an energy generated on a secondary winding side to a load,
wherein the switch unit comprises: first and second diodes whose anodes are connected to the input terminal side of the switch unit, whose cathodes are connected to the output terminal side of the switch unit, and mutually connected in parallel to each other; a first switching element interposed between the cathode of the first diode and the output terminal of the switch unit to conduct between the cathode of the first diode and the output terminal in response to an input of an on signal; a second switching element interposed between the input terminal and the anode of the second diode to conduct between the input terminal and the second diode in response to the input of the on signal; and a resonance capacitor interposed between a junction point between the cathode of the first diode and the first switching element and another junction point between the second switching element and the anode of the second diode and the secondary circuit includes a second inductor interposed between the secondary winding and the load.

2. An electric power conversion device, comprising:
a primary circuit including: a first inductorhaving one end side connected to a positive terminal of a direct current power supply; first and second switch units having input and output terminals, the input terminals of the first and second switch units being connected to the other terminal side of the first inductor, and which are mutually connected in parallel to each other; a first primary winding of a transformer having one end side connected to the output terminal of the first switch unit and having the other end side connected to a negative terminal of the direct current power supply via a center tap and a second primary winding of the transformer having one end side connected to the output terminal of the second switch unit and the other end side connected to the negative terminal of the direct current power supply via the center tap; and
a secondary circuit supplying an electric power to at least one primary winding of the first primary winding and the second primary winding to supply an energy generated at a secondary winding side to a load,
wherein each of the first and second switch units comprises: first and second diodes whose anodes are connected to the input terminal side, whose cathodes are connected to the output terminal side, and which are mutually connected in parallel to each other; a first switching element interposed between the cathode of the first diode and the output terminal to conduct between the cathode of the first diode and the output terminal in response to an input of an on signal; a second switching element interposed between the input terminal and the anode of the second diode to conduct between the input terminal and the second diode in response to the input of the on signal; and a resonance capacitor interposed between a junction point between the cathode of the first diode and the first switching element and another junction point between the second switching element and the anode of the second diode and the secondary circuit includes a second inductor interposed between the secondary winding and the load.

3. An electric power conversion device, comprising:
a primary circuit including: a first inductor whose one end side is connected to a first terminal constituting a positive terminal of a direct current power supply or one terminal of an alternating current power supply; a switch unit having an input terminal and an output terminal, the input terminal of the switch being connected to the other end side of the first inductor; and a primary winding of a transformer having one end side connected to the output terminal of the switch unit and the other end side connected to a second terminal which is an opposite polarity to the first terminal; and
a secondary circuit supplying an electric power to the primary winding of the transformer to supply an energy generated on a secondary winding side to a load,
wherein the switch unit comprises: first and third switching elements installed on one of parallel two signal lines connected from the input terminal to the output terminal to be conducted in response to an input of an on signal; second and fourth switching elements installed on the other of the two signal lines to be conducted in response to the input of the on signal; a resonance capacitor interposed between a junction point between the first switching element and the third switching element and another junction point between the second switching element and the fourth switching element; a first flywheel diode whose anode is connected to the input terminal side and cathode is connected to the output terminal side and which is connected in parallel to the first switching element; a second flywheel diode whose cathode is connected to the input terminal side and anode is connected to the output terminal side and which is connected in parallel to the second switching element; a third flywheel diode whose cathode is connected to the input terminal side and anode is connected to the output terminal side and which is connected in parallel to the third switching element; and a fourth flywheel diode whose anode is connected to the input terminal side and cathode is connected to the output terminal side and which is connected in parallel to the fourth switching element and the secondary circuit includes a second inductor interposed between the secondary winding and the load.

4. An electric power conversion device, comprising:
a primary circuit including: a first inductor having one end side connected to a first terminal constituting a positive terminal of a direct current power supply or one terminal of an alternating current power supply; first and second switch units having an input terminal and an output terminal, the input terminal being connected to the other end side of the first inductor and the first and second switch units being mutually connected to each other; a first primary winding of a transformer having one end side connected to the output terminal of the first switch unit and the other end side connected to a second terminal constituting an opposite polarity to the first terminal; and a second primary winding of the transformer, the second primary winding having one end side connected to the output terminal of the second switch unit and the other end side connected to the second terminal; and
a secondary circuit supplying an electric power to at least one primary winding of the first primary winding of the transformer and the second primary winding of the transformer to supply an energy generated on a secondary winding side to a load,
wherein each of the first and second switch units comprise: first and third switching elements disposed on one of parallel two signal lines connected from the input terminal to the output terminal and which is conducted in response to an input of an on signal; second and fourth switching elements disposed on the other of the two signal lines and which is conducted in response to the input of the on signal; a resonance capacitor disposed between a junction point of the first switching element and the third switching element and another junction point of the second switching element and the fourth switching element; a first flywheel diode whose anode is connected to the input terminal side and whose cathode is connected to the output terminal side and which is connected in parallel to the first switching element; a second flywheel diode whose cathode is connected to the input terminal side and whose anode is connected to the output terminal side and which is connected in parallel to the second switching element; a third flywheel diode whose cathode is connected to the input terminal side and whose anode is connected to the output terminal side and which is connected in parallel to the third switching element; and a fourth flywheel diode whose anode is connected to the input terminal side and whose cathode is connected to the output terminal side and which is connected in parallel to the fourth switching element and the secondary circuit includes a second inductor disposed between the secondary winding and the load.

5. The electric power conversion device as claimed in either claim 3 or claim 4, wherein the flywheel diodes connected in parallel to the respective switching elements are built in the corresponding switching elements to form integrated switching elements.

6. The electric power conversion device as claimed in any one of the preceding claims 1 through 5, wherein an inductance value of the primary winding of the transformer is equal to or larger than two times of the inductance value of the first inductor but is equal to or smaller than ten times of the inductance value of the first inductor.

7. The electric power conversion device as claimed in any one of the preceding claims 1 through 6, wherein, under an operating condition under which an output current flowing through the second inductor gives maximum, the resonance capacitor has a capacitance such that the current of at least one of the first inductor and the second inductor is zero when one of the switching elements which is in an off state during a discharge of the resonance capacitor is turned on.

8. A driving method for the electric power conversion device as claimed in either claim 2 or 4, wherein an on-or-off control of the first switch unit and the on-or-off control of the second switch unit are alternately executed.

9. A driving method for the electric power conversion device as claimed in any one of the preceding claims 3 through 5, wherein one of the switching elements connected in parallel to a corresponding one of the flywheel diodes which is switched to a conduction state is turned on in synchronization with a timing at which the corresponding flywheel diode is switched to the conduction state.

10. A driving method for the electric power conversion device as claimed in claim 7, wherein the switching elements are operated at an operating frequency at which a current flowing through the second inductor is discontinuous.

11. A driving method for the electric power conversion device as claimed in any one of the preceding claims 1 through 7, wherein an output electric power of the device is controlled by adjusting an on time duration of a switching of the switching elements within a range from a time duration during which a discharge of the resonance capacitor is started in response to an on state of the switching elements and the discharge of the resonance capacitor is ended to a half of an operating period of an on-or-off control of the switching elements.

12. A driving method for the electric power conversion device as claimed in any one of the preceding claims 1 through 7, wherein an output electric power of the device is controlled by adjusting a number of switching pulses per unit time, the switching pulse being such that the switching elements are turned on in response to an on state of the switching pulse to start a discharge of the resonance capacitor and the switching elements are turned off in response to an off state of the switching pulse at the same time when the discharge of the resonance capacitor is ended.
